# EUROPÄISCHE PATENTANMELDUNG

(11) **EP 4 737 179 A1**
(43) Veröffentlichungstag der Anmeldung: **06.05.2026**
(21) Anmeldenummer: 25212048.0
(22) Anmeldetag: 29.10.2025
(51) Int. Cl.: B60K 17/356, B60K 17/36, B60K 1/02, B60K 17/04, F16H 48/08, F16H 48/10

(54) **ELEKTRISCHER ACHSANTRIEB UND ANTRIEBSANORDNUNG FÜR EIN FAHRZEUG**

(30) Priorität: 04.11.2024 DE 102024210559
(71) Anmelder: ZF Friedrichshafen AG, 88046 Friedrichshafen (DE)
(72) Erfinder: Pfeffer, Andreas, 94234 Viechtach (DE); Reitinger, Franz, 4092 Esternberg (AT); Mühlbauer, Alexander, 94575 Windorf (DE)
(74) Vertreter: ZF Friedrichshafen AG

(57) **Zusammenfassung**

Ein elektrischer Achsantrieb (1) ist für ein Fahrzeug vorgesehen. Der elektrische Achsantrieb weist eine erste Achse (2) zum Anbringen von Rädern (6), eine elektrischen Antriebseinrichtung (7), die einen Elektromotor und ein Antriebsausgangselement (10) zum Antreiben der ersten Achse (2) aufweist, und einen Abtrieb (14) zum mechanischen Anbinden einer zweiten Achse (2; 50) zum Anbringen von Rädern (6). Der elektrische Achsantrieb (1) ist ausgebildet, um mit der elektrischen Antriebseinrichtung (7) neben der ersten Achse (2) auch die zweite Achse (2; 50) über den Abtrieb (14) anzutreiben. Der Elektromotor und das Antriebsausgangselement (10) sind versetzt zu der ersten Achse (2) angeordnet.

## Beschreibung

### Technisches Gebiet

Die vorliegende Erfindung bezieht sich auf einen elektrischen Achsantrieb, auf eine elektrische Antriebsanordnung mit solch einem elektrischen Achsantrieb sowie auf ein Fahrzeug mit solch einer Antriebsanordnung.

### Stand der Technik

Im Rahmen der Elektrifizierung von Antriebsanordnungen für Fahrzeuge wurden elektrische Achsantriebe entwickelt, mit denen eine Fahrzeugachse antreibbar ist. Zum Bereitstellen eines Mehrachs-Antriebs von Fahrzeugen ist es bekannt, jede der Antriebsachsen mit einem eigenen elektrischen Achsantrieb auszustatten, um so eine Funktion eines Mehrachs-Antriebs bereitstellen zu können.

### Darstellung der Erfindung

Es ist eine Aufgabe der vorliegenden Erfindung, einen verbesserten elektrischen Achsantrieb bereitzustellen, der einen geringen Bauraum aufweist.

Die Aufgabe wird von einem elektrischen Achsantrieb gelöst, der die Merkmale des Anspruchs 1 aufweist. Vorteilhafte Weiterbildungen sind Gegenstand der abhängigen Ansprüche.

In einem ersten Aspekt ist ein elektrischer Achsantrieb für ein Fahrzeug vorgesehen. Bei dem Fahrzeug kann es sich um ein Nutzfahrzeug, beispielsweise einen Lastkraftwagen, handeln. Bei dem Fahrzeug kann es sich um ein Off-Highway- oder um ein On-Highway-Fahrzeug handeln. Beispielsweise handelt es sich bei dem Fahrzeug um ein Militärfahrzeug, wie einen Radpanzer. Der elektrische Achsantrieb weist eine erste Achse zum Antreiben von Rädern auf. Die Räder können mit der ersten Achse direkt und alternativ oder zusätzlich über eine oder mehrere Getriebestufen mechanisch wirkverbunden sein. Über die erste Achse kann den Rädern ein Drehmoment zum Vortrieb des Fahrzeugs zugeführt werden. Der elektrische Achsantrieb umfasst ferner eine Antriebseinrichtung zum Antreiben der ersten Achse. Die Antriebseinrichtung weist zumindest einen Elektromotor auf. Die Antriebseinrichtung kann ausgebildet sein, um ein Drehmoment bereitzustellen, mit dem das Fahrzeug bestimmungsgemäß fortbewegt werden kann. So kann das Drehmoment der Antriebseinrichtung an die erste Achse und von dieser an die Räder zum Vortrieb des Fahrzeugs übertragen werden.

Die Antriebseinrichtung weist ein Antriebsausgangselement auf. Das Antriebsausgangselement kann zum Ausgeben des Drehmoments, einer Leistung oder einer Antriebskraft des Elektromotors ausgestaltet sein. Das Antriebsausgangselement kann als Ausgangswelle ausgestaltet sein. Das Antriebausgangselement kann eine Welle-Nabe-Kontur, beispielswese eine Keilwellenkontur oder Zahnwellenkontur, beispielsweise zum Übertragen eines Drehmoments, aufweisen. Das Antriebsausgangselement kann einen Verschraubungsflansch aufweisen. Das Antriebsausgangselement kann drehfest mit einem Eingangselement eines Zwischengetriebes verbunden sein. Das Antriebsausgangselement kann das Eingangselement des Zwischengetriebes ausbilden. Der elektrische Achsantrieb kann das Zwischengetriebe aufweisen. Das Zwischengetriebe kann ein Eingangselement, beispielsweise ein Stirnrad oder Kegelrad, aufweisen. Das Zwischengetriebe kann ein Ausgangselement, beispielswese ein Stirnrad oder Kegelrad, aufweisen. Das Eingangselement kann mechanisch, beispielswese über einen Zahneingriff, mit dem Ausgangselement wirkverbunden sein. Das Zwischengetriebe kann zumindest eines von einer Stirnradstufe und einer Kegelradstufe aufweisen. Das Zwischengetriebe kann als Stirnradstufe oder Kegelradstufe ausgestaltet sein.

Der elektrische Achsantrieb kann dabei räumlich und funktional der ersten Achse zugeordnet sein. Der Elektromotor und das Antriebsausgangselement sind versetzt zu der ersten Achse angeordnet. Beispielsweise kann der Elektromotor und das Antriebsausgangselement achsparallel zu der ersten Achse angeordnet sein. Dann kann der Elektromotor und das Antriebsausgangselement quer zu einer Fahrzeugrichtung eingerichtet sein. Die Fahrzeugrichtung kann von einer Richtung gebildet sein, in der sich das Fahrzeug bestimmungsgemäß in einer Geradeausfahrt bewegt. Der Elektromotor und das Antriebsausgangselement können geneigt oder schräg, beispielsweise senkrecht, zu der ersten Achse angeordnet sein. Dann kann der Elektromotor und das Antriebsausgangselement längs zu der Fahrzeugrichtung eingerichtet sein. Dabei kann der elektrische Achsantrieb der ersten Achse räumlich zugeordnet sein. Dies kann beispielsweise derart sein, dass der elektrische Achsantrieb näher an der ersten Achse als an sonstigen Achsen des Fahrzeugs angeordnet ist. Bei den Rädern kann es sich um Räder handeln, die unmittelbar mit dem Boden zum Fortbewegen des Fahrzeugs im Eingriff stehen. Alternativ kann es sich bei den Rädern auch um Räder handeln, die mit einem Endlosumlaufelement, beispielsweise einer Kette, im Eingriff stehen.

Darüber hinaus weist der elektrische Achsantrieb einen Abtrieb zum mechanischen Anbinden einer zweiten Achse auf. Bei dem Abtrieb kann es sich beispielsweise um ein Zahnrad handeln, das als Festrad ausgebildet sein kann. Beispielsweise ist das Zahnrad als Kegelrad oder Kegelritzel ausgebildet. Alternativ kann der Abtrieb als anderes Maschinenelement ausgebildet sein, über welches ein Drehmoment an eine zweite Achse übertragen werden kann. Die zweite Achse kann gemäß den obigen Ausführungen im Zusammenhang mit der ersten Achse ausgebildet sein. Der Abtrieb kann in einer Ausführungsform ausgebildet sein, um an Maschinenelemente, die im Zusammenhang mit Mehrachs-Antrieben, beispielsweise Allradsystemen, beispielsweise für Verbrennungsmotoren herkömmlich verwendet werden, angebunden zu werden.

Dabei ist der elektrische Achsantrieb der vorliegenden Erfindung ausgebildet, um mit der elektrischen Antriebseinrichtung nicht nur die erste Achse, sondern auch die zweite Achse über den Abtrieb antreiben zu können. Der elektrische Achsantrieb kann dabei über den Abtrieb an die zweite Achse ein Drehmoment abgeben, das allein oder im Zusammenspiel mit einem Drehmoment einer weiteren Antriebseinrichtung zum Antreiben der zweiten Achse eingerichtet ist. Dabei kann der elektrische Achsantrieb das Drehmoment der Antriebseinrichtung an die erste und die zweite Achse gleich oder aber unterschiedlich verteilen. Beispielsweise kann ein größerer Teil des Drehmoments an die erste Achse und ein kleinerer Teil des Drehmoments an die zweite Achse übertragen werden. Der elektrische Achsantrieb kann eine Schalteinrichtung aufweisen, mit welcher die zweite Achse selektiv zu- oder abgeschaltet werden kann. Die zweite Achse kann dabei eine Achse sein, die für den Betrieb in Verbindung mit einem Verbrennungsmotor ausgebildet ist. So kann es sich bei der zweiten Achse beispielsweise um eine für Verbrennungsmotoren ausgelegte Achse handeln. Der Abtrieb des elektrischen Achsantriebs kann mit der zweiten Achse über eine Gelenkwelle, beispielsweise über eine für Verbrennungsmotoren ausgelegte Gelenkwelle, verbindbar sein.

Dadurch wird ein elektrischer Achsantrieb bereitgestellt, mit dem auf einfache und kosteneffiziente Weise ein Mehrachs-Antrieb, beispielsweise Allradantrieb, eines Fahrzeugs, beispielsweise eines Nutzfahrzeugs, realisierbar ist. Soll beispielsweise ein herkömmlicher für Verbrennungsmotoren ausgelegter Mehrachs-Antrieb elektrifiziert werden, so kann der elektrische Achsantrieb der vorliegenden Erfindung an einer der Achsen des Fahrzeugs vorgesehen und über dessen Abtrieb an eine weitere Achse des Fahrzeugs mechanisch angebunden werden. Die Anbindung an die weitere Achse kann dabei beispielsweise über bereits bestehende Komponenten erfolgen. Zur Elektrifizierung des Fahrzeugs kann in einem Fall demnach lediglich das Austauschen von einer Achse mit dem elektrischen Achsantrieb der vorliegenden Erfindung erforderlich sein. Demnach kann auf einfache und kosteneffiziente Art und Weise ein Mehrachs-Antrieb eines Fahrzeugs elektrifiziert werden. Auch eine nachträgliche Elektrifizierung eines Mehrachs-Antriebs eines Fahrzeugs ist mit dem vorliegenden elektrischen Achsantrieb beispielsweise im Rahmen einer Retrofit-Lösung möglich.

In einer Ausführungsform weist die erste Achse einen ersten Achsabschnitt zum Anbringen eines ersten Rads und einen zweiten Achsabschnitt zum Anbringen eines zweiten Rads auf. Bei den Achsabschnitten kann es sich jeweils um Komponenten handeln, die aus einem oder mehreren drehfest miteinander verbundenen Bauteilen ausgebildet sein können. Mit jedem der Achsabschnitte kann ein Rad in der oben beschriebenen Art und Weise verbunden sein. Im Rahmen der Ausführungsform kann der elektrische Achsantrieb ferner ein mit dem ersten und zweiten Achsabschnitt mechanisch wirkverbundenes Querdifferential zum Drehzahlausgleich zwischen den Achsabschnitten aufweisen. Bei dem Querdifferential kann es sich um ein Differential in einer Kegelradbauweise handeln. Alternativ oder zusätzlich kann es sich bei dem Querdifferential um ein Differential in einer Planetenradbauweise handeln. Das Querdifferential kann ein Eingangselement aufweisen. Das Ausgangselement des Zwischengetriebes kann drehfest mit dem Eingangselement des Querdifferentials verbunden sein. Das Eingangselement des Querdifferentials kann das Ausgangselement des Zwischengetriebes ausbilden. Bei einer Planetenradbauweise kann das Eingangselement des Querdifferentials als Radsatzelement, beispielsweise Planetenträger, ausgestaltet sein. Bei einer Kegelradbauweise kann das Eingangselement des Querdifferentials als Differentialkorb ausgestaltet sein. Das Querdifferential kann eine Differentialsperre aufweisen.

Das Querdifferential kann koaxial zu dem ersten und zweiten Achsabschnitt vorgesehen sein. Handelt es sich bei dem Querdifferential um ein Kegelraddifferential, kann dieses einen Differentialkorb aufweisen, der zum Antreiben der Achsabschnitte und damit der mit diesen verbundenen Rädern mechanisch mit der elektrischen Antriebseinrichtung wirkverbunden sein kann. In dem Differentialkorb können zwei parallel zueinander angeordnete Kegelräder gelagert sein, die jeweils drehfest mit den Achsabschnitten verbunden sind. Die Kegelräder können jeweils mit einem Zwischenrad kämmen, um einen Drehzahlausgleich zwischen den Achsabschnitten zu ermöglichen. Die Achse kann ferner eine Differentialsperre aufweisen, mit der beispielsweise mindestens einer der Achsabschnitte drehfest selektiv mit dem Differentialkorb verbunden werden kann.

Die Antriebseinrichtung kann ein Getriebe mit mehreren Gängen zum Antreiben der ersten und zweiten Achse aufweisen. Eine Antriebswelle des Elektromotors kann über das Getriebe mechanisch mit dem Antriebsausgangselement wirkverbunden sein. Bei dem Getriebe kann es sich um ein Getriebe in Planeten- und alternativ oder zusätzlich in Stirnradbauweise handeln. Das Getriebe kann eine Schalteinrichtung, beispielsweise ein oder mehrere Schaltelemente, aufweisen, mit denen unterschiedliche Übersetzungsverhältnisse, also unterschiedliche Gänge, geschaltet werden können. Das Getriebe kann einen oder mehrere Gänge sowohl in Vorwärts- als auch in Rückwärtsrichtung bereitstellen. Die Antriebseinrichtung, das Zwischengetriebe und das oben beschriebene Querdifferential können allesamt in einem elektrischen Achsantrieb der vorliegenden Erfindung vorgesehen sein. Durch das Vorsehen des Getriebes kann ein elektrischer Achsantrieb mit besonders kompakter Bauweise bereitgestellt werden, da das durch die elektrische Antriebseinrichtung bereitzustellende Drehzahlspektrum verkleinert werden kann. Der elektrische Achsantrieb kann dabei derart ausgebildet sein, dass die erste Achse und die zweite Achse mit dem gleichen oder aber mit unterschiedlichen Übersetzungsverhältnissen angetrieben werden.

Die elektrische Antriebseinrichtung kann einen einzigen Elektromotor aufweisen. Der einzige Elektromotor kann einen Rotor und einen Stator aufweisen, die beide versetzt zu der ersten Achse angeordnet sein können. Dabei kann der Rotor die Antriebswelle des elektrischen Motors bilden. Im Rahmen dieser Ausführungsform kann ein besonders kompakter elektrischer Achsantrieb bereitgestellt werden. In einer alternativen Ausführungsform kann die elektrische Antriebseinrichtung mehrere Elektromotoren, beispielsweise zwei Elektromotoren, aufweisen, die jeweils einen Rotor und einen Stator aufweisen können. Die mehreren Elektromotoren können jeweils versetzt zu der ersten Achse ausgebildet sein. Beispielsweise weisen die mehreren Elektromotoren den gleichen Außendurchmesser auf, um so einen elektrischen Achsantrieb mit einer gleichmäßigen Außenkontur und demnach einer guten Integrierbarkeit in das Fahrzeug bereitzustellen. Der einzige Elektromotor beziehungsweise die mehreren Elektromotoren können jeweils ausgebildet sein, um sowohl die erste Achse als auch die zweite Achse über den Abtrieb anzutreiben.

Weist der elektrische Achsantrieb einen einzigen Elektromotor auf, so kann dieser in Richtung der ersten Achse vor beziehungsweise hinter einem Getriebe des elektrischen Achsantriebs angeordnet sein. Im Ergebnis kann so ein elektrischer Achsantrieb mit einer verhältnismäßig geringen radialen Ausdehnung bereitgestellt werden. Weist der elektrische Achsantrieb hingegen eine elektrische Antriebseinrichtung mit mehreren elektrischen Antriebsmotoren auf, so können diese radial außerhalb eines Getriebes des elektrischen Achsantriebs angeordnet sein, sich mit diesem Getriebe jedoch in Axialrichtung der ersten Achse überlappen. Im Ergebnis kann so ein elektrischer Achsantrieb mit besonders kompakter axialer Baulänge bereitgestellt werden.

In einer Ausführungsform weist der Achsantrieb einen weiteren Abtrieb zum mechanischen Anbinden einer dritten Achse zum Anbringen von Rädern auf. Der elektrische Achsantrieb kann eine Schalteinrichtung aufweisen, mit welcher die dritte Achse selektiv zu- oder abgeschaltet werden kann. Hinsichtlich der Ausbildung des weiteren Abtriebs sowie der dritten Achse wird auf die obigen Ausführungen im Zusammenhang mit dem Abtrieb und der ersten beziehungsweise zweiten Achse verwiesen. In einer Ausführungsform werden der Abtrieb und der weitere Abtrieb durch zwei separate Elemente bereitgestellt. Alternativ kann jedoch auch ein einziges Element sowohl den Abtrieb als auch den weiteren Abtrieb ausbilden. Im Rahmen dieser Ausführungsform kann der elektrische Achsantrieb ausgebildet sein, um mit der elektrischen Antriebseinrichtung der ersten Achse auch die dritte Achse über den weiteren Abtrieb anzutreiben. So kann die elektrische Antriebseinrichtung ausgebildet sein, um sowohl die erste, die zweite als auch die dritte Achse anzutreiben. Bei der ersten Achse kann es sich beispielsweise um eine Hinterachse und bei der zweiten Achse um eine Vorderachse eines Fahrzeugs handeln. Bei der dritten Achse kann es sich beispielsweise um eine zweite Hinterachse handeln. Auch alternative Ausgestaltungen sind denkbar.

In einer Ausführungsform weist der elektrische Achsantrieb ein Längsdifferential zum Drehzahlausgleich zwischen der ersten Achse und der zweiten Achse auf. Das Längsdifferential kann ausgebildet sein, um es zu ermöglichen, dass die erste Achse und die zweite Achse mit unterschiedlichen Drehzahlen drehen. Darüber hinaus kann das Längsdifferential ausgebildet sein, um ein Drehmoment der elektrischen Antriebseinrichtung an die erste und die zweite Achse zu übertragen, beispielsweise auf die erste und die zweite Achse aufzuteilen. Wie oben beschrieben, kann mittels des Längsdifferentials dabei eine Aufteilung in gleiche oder unterschiedliche Teile auf die erste und die zweite Achse erfolgen. Das Längsdifferential kann koaxial zu der elektrischen Antriebseinrichtung beziehungsweise dem Antriebsausgangselement und alternativ oder zusätzlich der ersten Achse angeordnet sein. Das Längsdifferential kann eine Differentialsperre aufweisen. Der elektrische Achsantrieb kann ein Längsdifferential zum Drehzahlausgleich zwischen der ersten Achse und der dritten Achse aufweisen.

In einer Ausführungsform kann das Längsdifferential als zumindest eines von einem Planetenraddifferential und einem Kegelraddifferential ausgebildet sein. Soll ein Drehmoment der elektrischen Antriebseinrichtung auf die erste und die zweite Achse mit unterschiedlichen Anteilen verteilt werden, kann es sich bei dem Längsdifferential um ein Planetenraddifferential handeln. Das Planetenraddifferential kann als Minus- oder Plus-Planetenradsatz ausgebildet sein. Das Planetenraddifferential kann einen oder mehrere Planetenradsätze aufweisen. In einer Ausführungsform weist das Planetenraddifferential einen einzigen als Minus-Planetenradsatz ausgebildeten Planetenradsatz auf. Das Planetenraddifferential kann eine Standübersetzung aufweisen, die es ermöglicht, ein Drehmoment der elektrischen Antriebseinrichtung mit unterschiedlichen Anteilen auf die erste und die zweite Achse zu verteilen.

Beispielsweise kann der elektrische Achsantrieb als ein Hinterachsenantrieb ausgebildet sein, während eine Vorderachse an den Abtrieb mechanisch angebunden sein kann. Über das als Planetenraddifferential ausgebildete Längsdifferential kann nun ein Drehmoment der elektrischen Antriebseinrichtung so auf die Hinterbeziehungsweise Vorderachse aufgeteilt werden, dass beispielsweise ein größerer Anteil auf die Hinterachse und ein kleinerer Anteil auf die Vorderachse entfällt. Alternativ oder zusätzlich kann das Längsdifferential ein Kegelraddifferential aufweisen, welches ein Drehmoment der elektrischen Antriebseinrichtung zu gleichen Teilen auf die erste und die zweite Achse aufteilen kann. Das Kegelraddifferential des Längsdifferentials kann koaxial zu der ersten Achse angeordnet sein. So kann ein elektrischer Achsantrieb mit einer besonders kompakten Bauart bereitgestellt werden.

In einer Ausführungsform kann jeweils eines der Räder über eine Planetenstufe an die jeweilige Achse, beispielsweise eine der ersten, zweiten und dritten Achse, angebunden sein. Die Planetenstufe kann ein Sonnenrad, einen Planetenträger und ein Hohlrad aufweisen. Das Sonnenrad kann drehfest mit der jeweiligen Achse oder einem von dem ersten Achselement und dem zweiten Achselement der jeweiligen Achse drehfest verbunden sein. Der Planetenträger kann mechanisch mit dem jeweiligen Rad wirkverbunden sein, beispielsweise drehfest verbunden sein.

In einem zweiten Aspekt ist eine elektrische Antriebsanordnung mit einem elektrischen Achsantrieb gemäß einer der zuvor beschriebenen Ausführungsformen vorgesehen. Weitere Merkmale, Wirkungen und Vorteile für den zweiten Aspekt können dem ersten Aspekt entnommen werden. Ferner stellen Merkmale, Wirkungen und Vorteile des zweiten Aspekts auch Merkmale, Wirkungen und Vorteile für den ersten Aspekt dar. Die elektrische Antriebsanordnung umfasst ferner eine zweite Achse, wobei die zweite Achse über die elektrische Antriebseinrichtung der ersten Achse und den Abtrieb antreibbar ist. Wie die erste Achse kann auch die zweite Achse ein Querdifferential gemäß den obigen Ausführungen aufweisen.

In einer Ausführungsform kann zumindest eine von der zweiten Achse und der dritten Achse über das Längsdifferential antreibbar sein. Weist der elektrische Achsantrieb der ersten Achse ein Längsdifferential auf, so kann die zweite Achse starr, beispielsweise nicht schaltbar, an den Abtrieb des elektrischen Achsantriebs der ersten Achse angebunden sein. Weist der elektrische Achsantrieb der ersten Achse hingegen kein Längsdifferential auf, so kann die zweite Achse an den Abtrieb mittels einer Schalteinrichtung angebunden sein, um eine selektive Zu- oder Abschaltung der zweiten Achse zu ermöglichen.

In einer Ausführungsform weist eine elektrische Antriebsanordnung zwei elektrische Achsantriebe gemäß einer der zuvor beschriebenen Ausführungsformen auf. Bei den elektrischen Achsantrieben kann es sich dabei um Ausführungen handeln, die jeweils kein Längsdifferential aufweisen. Die Abtriebe der zwei elektrischen Achsantriebe können dabei in einen Drehmomentübertragungszustand gebracht werden, bei denen ein Drehmoment von dem einen zu dem anderen Abtrieb oder umgekehrt übertragen werden kann. Hierfür kann eine Schalteinrichtung vorgesehen sein, um eine mechanische Wirkverbindung zwischen den Abtrieben der elektrischen Achsantriebe selektiv herzustellen oder aufzulösen. Die elektrische Antriebsanordnung dieser Ausführungsform kann dabei derart ausgebildet sein, dass etwaige Drehzahlunterschiede zwischen der ersten und der zweiten Achse durch die eigenen elektrischen Antriebseinrichtungen der jeweiligen Achsen ausgeglichen werden können.

In einer Ausführungsform weist die elektrische Antriebsanordnung die dritte Achse auf, die über die elektrische Antriebseinrichtung und den weiteren Abtrieb der ersten Achse antreibbar ist.

In einem dritten Aspekt ist ein Fahrzeug mit einer elektrischen Antriebsanordnung gemäß einer der zuvor beschriebenen Ausführungsformen vorgesehen. Weitere Merkmale, Wirkungen und Vorteile für den zweiten Aspekt können dem ersten Aspekt entnommen werden. Ferner stellen Merkmale, Wirkungen und Vorteile des zweiten Aspekts auch Merkmale, Wirkungen und Vorteile für den ersten Aspekt dar. Hinsichtlich der Ausgestaltungen und Vorteile der einzelnen Merkmale wird auf die obigen Ausführungen im Zusammenhang mit dem elektrischen Achsantrieb verwiesen.

### Kurze Beschreibung der Figuren

Figuren 1A bis 1C zeigen jeweils eine Prinzipdarstellung einer Ausführungsform eines elektrischen Achsantriebs für ein Fahrzeug.
Figuren 2A bis 2C zeigen jeweils eine Prinzipdarstellung einer Ausführungsform des elektrischen Achsantriebes mit zwei Planetenstufen.
Figuren 3A bis 3C zeigen jeweils eine Prinzipdarstellung einer Ausführungsform des elektrischen Achsantriebs.
Figur 4 zeigt eine Prinzipdarstellung einer Ausführungsform einer elektrischen Antriebsanordnung für ein Fahrzeug.
Figuren 5A bis 5C zeigen jeweils eine Prinzipdarstellung einer Ausführungsform der elektrischen Antriebsanordnung mit zwei Achsen und mindestens einem elektrischen Achsantrieb der Figuren 1A bis 3C.
Figuren 6A bis 6D zeigen jeweils eine Prinzipdarstellung einer Ausführungsform der elektrischen Antriebsanordnung mit drei Achsen und mindestens einem elektrischen Achsantrieb der Figuren 1A bis 3C.
Figuren 7A bis 7C zeigen jeweils eine Prinzipdarstellung einer Ausführungsform der elektrischen Antriebsanordnung mit zwei Hinterachsen und mindestens einem elektrischen Achsantrieb der Figuren 1A bis 3C.
Figuren 8A bis 8C zeigen jeweils eine Prinzipdarstellung einer Ausführungsform des elektrischen Achsantriebs mit längs angeordneter Antriebseinrichtung.
Figuren 9A bis 9C zeigen jeweils eine Prinzipdarstellung einer Ausführungsform des elektrischen Achsantriebs.
Figur 10 zeigt eine Prinzipdarstellung einer Ausführungsform der elektrischen Antriebsanordnung.
Figuren 11A bis 11C zeigen jeweils eine Prinzipdarstellung einer Ausführungsform der elektrischen Antriebsanordnung mit zwei Achsen und mindestens einem elektrischen Achsantrieb der Figuren 8A bis 9C.
Figuren 12A bis 12D zeigen jeweils eine Prinzipdarstellung einer Ausführungsform der elektrischen Antriebsanordnung mit drei Achsen und mindestens einem elektrischen Achsantrieb der Figuren 8A bis 9C.
Figuren 13A bis 13C zeigen jeweils eine Prinzipdarstellung einer Ausführungsform der elektrischen Antriebsanordnung mit zwei Hinterachsen und mindestens einem elektrischen Achsantrieb der Figuren 8A bis 8C.

### Detaillierte Beschreibung von Ausführungsformen

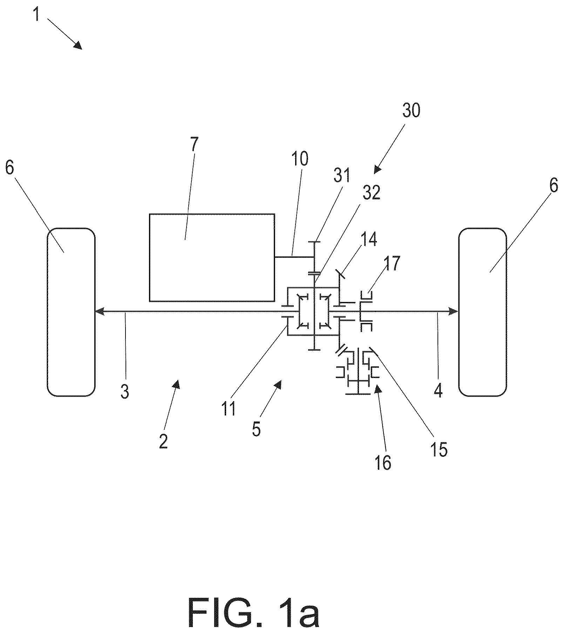

Figur 1A zeigt eine Prinzipdarstellung einer Ausführungsform eines elektrischen Achsantriebs 1 für ein Fahrzeug. Der Achsantrieb 1 umfasst eine Achse 2 mit einem ersten Achsabschnitt 3, einem zweiten Achsabschnitt 4 und einem Querdifferential 5. An dem ersten Achsabschnitt 3 und an dem zweiten Achsabschnitt 4 ist jeweils ein Rad 6 drehfest angebracht. Das Querdifferential 5 ist ausgebildet, um Drehzahlunterschiede zwischen dem ersten Achsabschnitt 3 und dem zweiten Achsabschnitt 4 ausgleichen zu können. In der vorliegenden Ausführungsform ist das Querdifferential 5 als Kegelraddifferential ausgebildet. Das Querdifferential 5 weist eine Differentialsperre 17 auf, mittels welcher ein Eingangselement des Querdifferentials 5, vorliegend ein Differentialkorb 11 des Querdifferentials 5, selektiv drehfest mit dem zweiten Achsabschnitt 4 verbindbar ist.

Darüber hinaus weist der elektrische Achsantrieb 1 eine elektrische Antriebseinrichtung 7 auf, die vorliegend einen einzigen Elektromotor und ein Antriebsausgangselement 10 aufweist. Die elektrische Antriebseinrichtung 7 ist versetzt zur Achse 2, vorliegend achsparallel und in der Fahrzeugrichtung vor der Achse 2, und radial außerhalb des ersten Achsabschnitts 3 vorgesehen. Das Antriebsausgangselement 10 ist versetzt zu der Achse 2 vorgesehen, vorliegend achsparallel und in der Fahrtrichtung vor der Achse 2. Die elektrische Antriebseinrichtung 7 ist mit einer nicht gezeigten Batterie elektrisch verbunden, um ein Antriebsmoment zum Antreiben der Achse 2 bereitzustellen. Das Antriebsausgangselement 10 ist mechanisch über ein Zwischengetriebe 30 mit dem Querdifferential 5, genauer gesagt dem Differentialkorb 11 des Querdifferentials 5, wirkverbunden.

Das Zwischengetriebe 30 weist ein Eingangselement 31, vorliegend ein Eingangszahnrad, und ein Ausgangselement 32 auf, vorliegend ein Ausgangszahnrad. Das Zwischengetriebe 30 ist in der Axialrichtung in derselben Ebene wie das Querdifferential 5 angeordnet. Das Eingangselement 31 und das Ausgangselement 32 sind in Zahneingriff miteinander. Das Zwischengetriebe 30 ist als ein Stirnradsatz ausgebildet. Das Antriebsausgangselement 10 ist drehfest mit dem Eingangselement 31 des Zwischengetriebes 30 verbunden. Das Ausgangselement 32 des Zwischengetriebes 30 ist drehfest mit dem Eingangselement 11 des Querdifferentials 5 verbunden. Demnach wird ein über Ausgangselement 32 des Zwischengetriebes 30 bereitgestelltes Drehmoment an den Differentialkorb 11 des Querdifferentials 5 übertragen. Der Differentialkorb 11 überträgt nun das Drehmoment an die Achsabschnitte 3, 4 und hierüber an die Räder 6 zum Vortrieb des Fahrzeugs. In dem Differentialkorb 11 sind mehrere Kegelräder miteinander in Eingriff gelagert, über welche ein Drehzahlausgleich zwischen dem ersten Achsabschnitt 3 und dem zweiten Achsabschnitt 4 möglich ist.

Darüber hinaus umfasst der elektrische Achsantrieb 1 einen Abtrieb 14 zum mechanischen Anbinden einer zweiten in Figur 1A nicht gezeigten Achse. Der Abtrieb 14 ist in der vorliegenden Ausführungsform als Festrad ausgebildet, das auf dem Differentialkorb 11 des Querdifferentials 5 permanent drehfest vorgesehen ist. Damit ist das Ausgangselement 32 des Zwischengetriebes 30 drehfest mit dem Abtrieb 14 verbunden. In der vorliegenden Ausführungsform ist das Festrad 14 dabei als Tellerrad ausgebildet. Mit dem Tellerrad 14 kann ein Kegelritzel 15 mechanisch eingreifen, um ein Drehmoment der elektrische Antriebseinrichtung 7 an die nicht gezeigte zweite Achse übertragen zu können. Dabei ist eine Schalteinrichtung 16 vorgesehen, die zum Herstellen der mechanischen Wirkverbindung zwischen dem Tellerrad 14 bzw. dem Kegelritzel 15 und der nicht gezeigten zweiten Achse betätigt werden muss. Ist die Schalteinrichtung 16 beispielsweise eingelegt, so kann eine mechanische Wirkverbindung zwischen dem Tellerrad 14 und der nicht gezeigten zweiten Achse hergestellt sein. Ist die Schalteinrichtung 16 hingegen geöffnet, so kann kein Drehmoment von dem Tellerrad 14 an die zweite nicht gezeigte Achse übertragen werden.

Der elektrische Achsantrieb 1 der in Figur 1A gezeigten Ausführungsform ist demnach ausgebildet, um ein Drehmoment der elektrischen Antriebseinrichtung 7 sowohl an die erste Achse 2 als auch über den Abtrieb 14 an eine nicht gezeigte zweite Achse zu übertragen. Demnach kann mit dem elektrischen Achsantrieb 1 der vorliegenden Ausführungsform beispielsweise auf einfache und kosteneffiziente Weise ein elektrifizierter Mehrachs-Antrieb, beispielsweise einen Allradantrieb, mit zwei angetriebenen Achsen für ein Fahrzeug bereitgestellt werden.

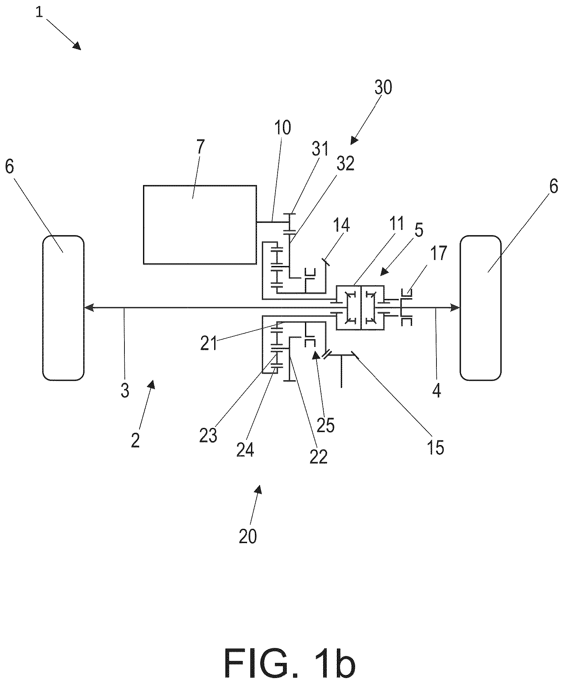

Figur 1B zeigt eine Prinzipdarstellung einer weiteren Ausführungsform des elektrischen Achsantriebs 1. Der Achsantrieb 1 der vorliegenden Ausführungsform entspricht der in Figur 1A gezeigten Ausführungsform des Achsantriebs 1 mit Ausnahme der im Folgenden beschriebenen Unterschiede. Gleiche Bezugszeichen kennzeichnen entsprechende Bauteile.

Im Unterschied zu der Ausführungsform von Figur 1A weist der elektrische Achsantrieb 1 der Ausführungsform von Figur 1B ein Längsdifferential 20 auf, das mechanisch über das Zwischengetriebe 30 mit dem Antriebsausgangselement 10, dem Querdifferential 5 und dem Abtrieb 14 des elektrischen Achsantriebs 1 wirkverbunden ist. Das Längsdifferential 20 ist koaxial zur Achse 2 vorgesehen und als Planetenraddifferential ausgebildet. Das Zwischengetriebe 30 ist in der Axialrichtung in derselben Ebene angeordnet wie das Längsdifferential 20. Das Längsdifferential 20 der vorliegenden Ausführungsform ist ferner ausgebildet, um ein Drehmoment des Ausgangselements 32 des Zwischengetriebes 30 auf die erste Achse 2 und die weitere mit dem Abtrieb 14 mechanisch gekoppelte und nicht gezeigte Achse aufzuteilen. Dabei ist das Planetenraddifferential 20 der vorliegenden Ausführungsform ausgebildet, um das Drehmoment am Ausgangselement 32 des Zwischengetriebes 30 ungleich zwischen der ersten Achse 2 und der weiteren nicht gezeigten Achse aufzuteilen. In anderen Worten wird das Drehmoment des Ausgangselements 32 des Zwischengetriebes über das Planetenraddifferential 20 dieser Ausführungsform so aufgeteilt, dass eine der Achsen ein höheres Drehmoment als die andere der Achsen erhält. Das Längsdifferential 20, der Abtrieb 14 und das Querdifferential 5 sind in dieser Reihenfolge in Richtung der ersten Achse 2 vom linken Achsabschnitt 3 zum rechten Achsabschnitt 4 hintereinander angeordnet.

Das in Planetenbauweise ausgebildete Längsdifferential 20 weist einen einzigen Planetenradsatz mit einem Sonnenrad 21, einem Planetenträger 22 mit darauf drehbar gelagerten Planetenrädern 23 und einem Hohlrad 24 auf. Das Sonnenrad 21 des Längsdifferentials 20 ist permanent drehfest mit dem als Tellerrad ausgebildeten Abtrieb 14 verbunden. Das Hohlrad 24 des Längsdifferentials 20 ist permanent drehfest mit dem Differentialkorb 11 des Querdifferentials 5 der ersten Achse 2 verbunden. Ferner ist der Planetenträger 22 des Längsdifferentials 20 permanent drehfest mit dem Ausgangselement 32 des Zwischengetriebes 30 verbunden. Ein über den Planetenträger 22 in das Längsdifferential 20 eingeleitetes Drehmoment des Ausgangselements 32 des Zwischengetriebes 30 wird durch das Längsdifferential 20 auf das Sonnenrad 21 und das Hohlrad 24 und damit auf das Querdifferential 5 und den Abtrieb 14 aufgeteilt. Die Aufteilung des Drehmoments auf diese beiden Komponenten erfolgt dabei im Lichte der durch das Längsdifferential 20 bereitgestellten Standübersetzung. Ferner ist das Längsdifferential 20 ausgebildet, um Drehzahlunterschiede zwischen der ersten Achse 2 und einer nicht gezeigten mit dem Abtrieb 14 mechanisch wirkverbundenen zweiten Achse ausgleichen zu können. Das Längsdifferential 20 weist ferner eine Differentialsperre 25 auf, über welche der Planetenträger 22 mit dem Sonnenrad 21 des Längsdifferentials 20 selektiv drehfest verbunden werden kann, um den Planetenradsatz zu verblocken.

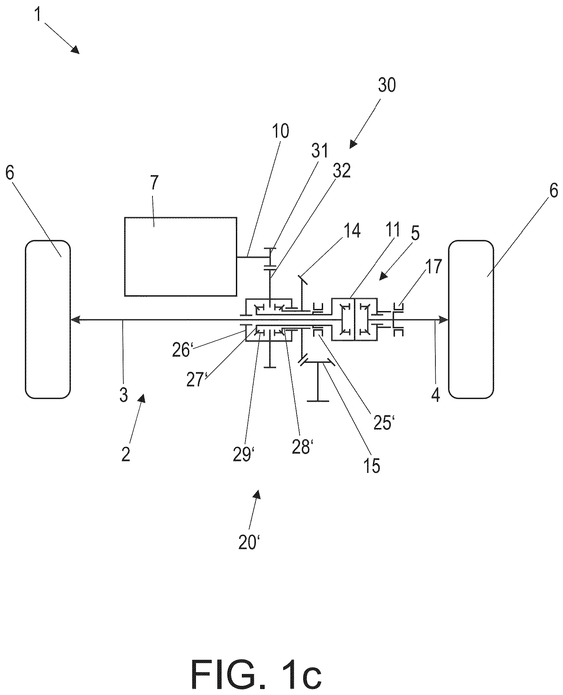

Figur 1C zeigt eine Prinzipdarstellung einer Ausführungsform des elektrischen Achsantriebs 1. Der elektrische Achsantrieb 1 gemäß der Ausführungsform von Figur 1C entspricht der Ausführungsform des elektrischen Achsantriebs aus Figur 1B mit Ausnahme der im Folgenden beschriebenen Unterschiede. Gleiche Bezugszeichen kennzeichnen entsprechende Bauteile.

Im Unterschied zu dem Achsantrieb 1 aus Figur 1B weist der Achsantrieb 1 aus Figur 1C ein Längsdifferential 20' auf, welches als Kegelraddifferential ausgebildet ist. Das Kegelraddifferential 20' ist ausgebildet, um ein Drehmoment des Ausgangselements 32 des Zwischengetriebes 30 auf die erste Achse 2 und über den Abtrieb 14 auf eine weitere nicht gezeigte zweite Achse aufzuteilen. Dabei wird das Drehmoment des Ausgangselements 32 des Zwischengetriebes 30 durch das als Kegelraddifferential ausgebildete Längsdifferential 20' im Wesentlichen in gleichen Teilen auf die erste Achse 2 und die zweite Achse aufgeteilt.

Das Kegelraddifferential 20' umfasst einen Differentialkorb 26', der permanent drehfest mit dem Ausgangselement 32 des Zwischengetriebes 30 verbunden ist. Ferner umfasst das Kegelraddifferential 20' ein erstes koaxial zur ersten Achse 2 angeordnetes Differentialkegelrad 27', das permanent drehfest mit dem Differentialkorb 11 des Querdifferentials 5 verbunden ist. Ein weiteres koaxial zur Achse 2 angeordnetes Differentialkegelrad 28' ist permanent drehfest mit dem als Tellerrad ausgebildeten Abtrieb 14 verbunden. Die Differentialkegelräder 27' und 28' sind über ein als Differentialkegelrad ausgebildetes Zwischenrad 29' in mechanischer Wirkverbindung. Demnach kann über das Kegelraddifferential 20' ein Drehzahlunterschied zwischen der ersten Achse 2 und der nicht gezeigten zweiten Achse ausgeglichen werden. Entsprechend der Ausführungsform von Figur 1B umfasst das Längsdifferential 20' der Ausführungsform von Figur 1C eine Differentialsperre 25'. Über die Differentialsperre 25' kann selektiv der Abtrieb 14 mit dem Differentialkorb 11 des Querdifferentials 5 drehfest verbunden werden.

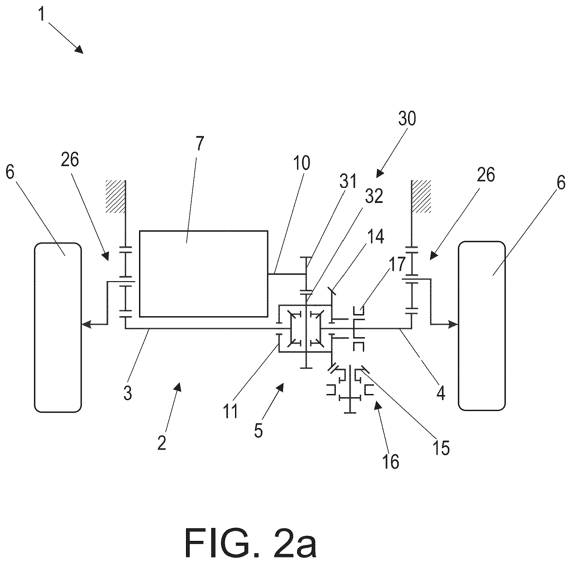

Figur 2A zeigt eine Prinzipdarstellung einer Ausführungsform des elektrischen Achsantriebs 1 mit zwei Planetenstufen 26. Der elektrische Achsantrieb 1 der Ausführungsform von Figur 2A ist gemäß dem elektrischen Achsantrieb 1 der Ausführungsform von Figur 1A mit Ausnahme der im Folgenden beschriebenen Unterschiede ausgebildet. Gleiche Bezugszeichen kennzeichnen entsprechende Bauteile.

Im Unterschied zu der Ausführungsform von Figur 1A weist die Ausführungsform von Figur 2A eine elektrische Antriebseinrichtung mit zwei Planetenstufen 26 auf. Jeweils eine der Planetenstufen 26 ist zwischen einem der Achsabschnitte 3 und 4 und dem jeweiligen Rad 6 zum Bereitstellen einer zusätzlichen Übersetzung zwischen diesen Elementen vorgesehen.

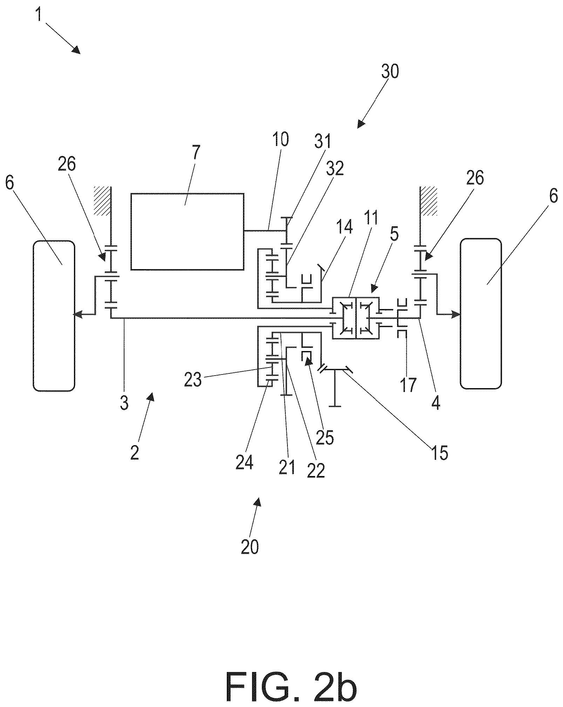

Figur 2B zeigt eine Prinzipdarstellung einer Ausführungsform des elektrischen Achsantriebs 1 mit zwei Planetenstufen 26. Der elektrische Achsantrieb 1 der Ausführungsform von Figur 2B entspricht dem elektrischen Achsantrieb 1 der Ausführungsform von Figur 2A mit Ausnahme der im Folgenden beschriebenen Unterschiede. Gleiche Bezugszeichen kennzeichnen entsprechende Bauteile.

Im Unterschied zu der Ausführungsform von Figur 2A ist der das Ausgangselement 32 des Zwischengetriebes 30 in der Ausführungsform von Figur 2B nicht drehfest mit dem Differentialkorb 11 des Querdifferentials 5, sondern mit einem als Planetenraddifferential ausgebildeten Längsdifferential 20 verbunden. So wurde es auch im Zusammenhang mit der Ausführungsform von Figur 1B beschrieben. Das Planetenraddifferential 20 zum Längsausgleich der Ausführungsform von Figur 2B ist entsprechend der Ausgestaltung von der Ausführungsform von Figur 1B an das Ausgangselement 32 des Zwischengetriebes 30, das Querdifferential 5 und den Abtrieb 14 mechanisch angebunden. Es wird diesbezüglich auf die Ausführungen im Zusammenhang mit der Ausführungsform von Figur 1B verwiesen.

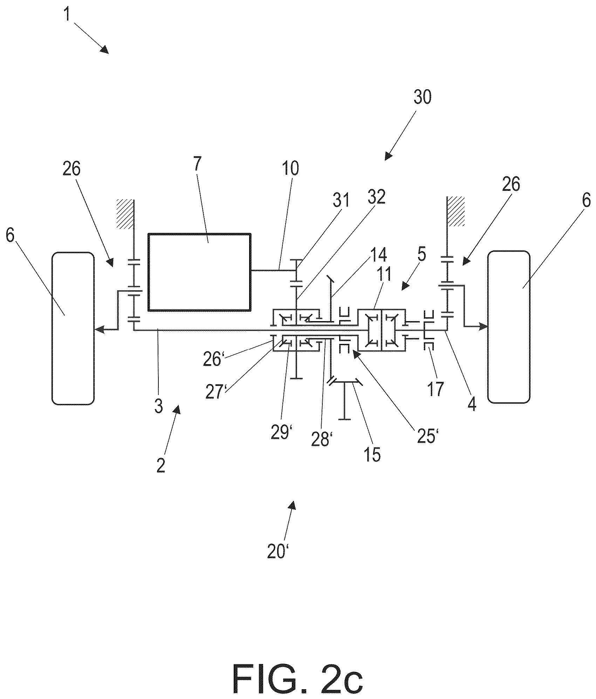

Figur 2C zeigt eine Prinzipdarstellung einer Ausführungsform des elektrischen Achsantriebs 1 mit zwei Planetenstufen 26. Der elektrische Achsantrieb 1 der Ausführungsform von Figur 2C entspricht dem elektrischen Achsantrieb 1 der Ausführungsform von Figur 2A mit Ausnahme der im Folgenden beschriebenen Unterschiede. Gleiche Bezugszeichen kennzeichnen entsprechende Bauteile.

Im Unterschied zu der Ausführungsform von Figur 2A ist der das Ausgangselement 32 des Zwischengetriebes 30 in der Ausführungsform von Figur 2C nicht drehfest mit dem Differentialkorb 11 des Querdifferentials 5, sondern mit einem als Kegelraddifferential ausgebildeten Längsdifferential 20' verbunden. So wurde es auch im Zusammenhang mit der Ausführungsform von Figur 1C beschrieben. Das Kegelraddifferential 20' zum Längsausgleich der Ausführungsform von Figur 2C ist entsprechend der Ausgestaltung von der Ausführungsform von Figur 1C an den das Ausgangselement 32 des Zwischengetriebes 30, das Querdifferential 5 und den Abtrieb 14 mechanisch angebunden. Es wird diesbezüglich auf die Ausführungen im Zusammenhang mit der Ausführungsform von Figur 1C verwiesen.

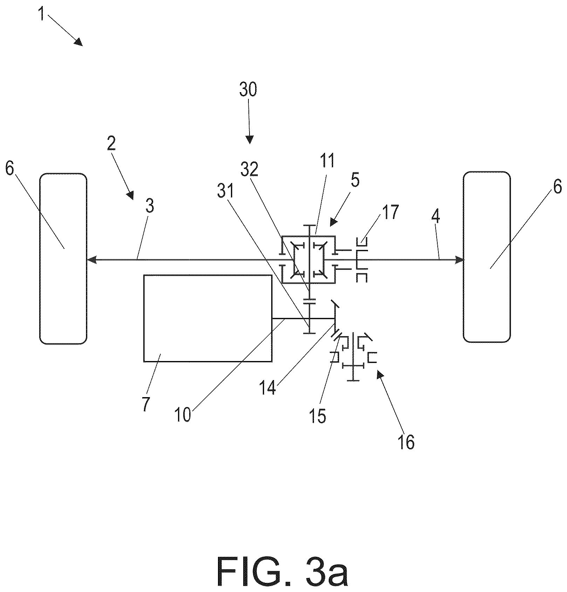

Figur 3A zeigt eine Prinzipdarstellung einer Ausführungsform des elektrischen Achsantriebs 1. Der elektrische Achsantrieb 1 der Ausführungsform von Figur 3A entspricht dem elektrischen Achsantrieb 1 der Ausführungsform von Figur 1A mit Ausnahme der im Folgenden beschriebenen Unterschiede. Gleiche Bezugszeichen kennzeichnen entsprechende Bauteile. In der vorliegenden Ausführungsform ist die Antriebsvorrichtung 7 in der Fahrzeugrichtung hinter der Achse 2 angeordnet. Der Abtrieb 14 ist drehfest mit dem Antriebsausgangselement 10 verbunden.

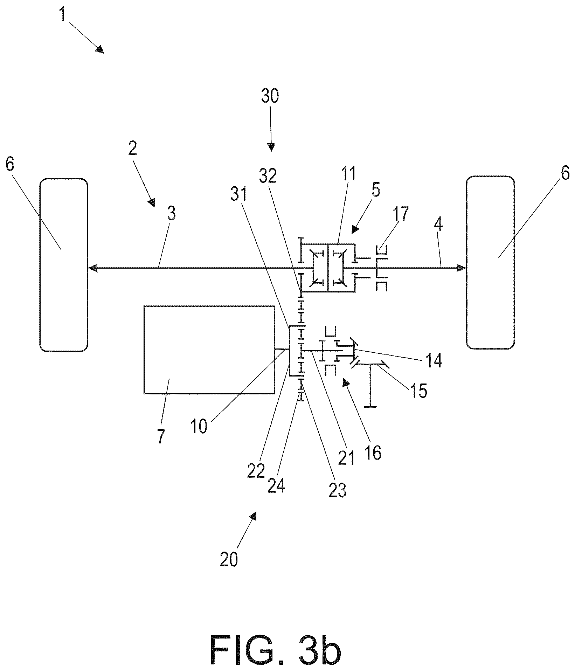

Figur 3B zeigt eine Prinzipdarstellung einer Ausführungsform des elektrischen Achsantriebs 1. Der elektrische Achsantrieb 1 der Ausführungsform von Figur 3B entspricht dem elektrischen Achsantrieb 1 der Ausführungsform von Figur 1B mit Ausnahme der im Folgenden beschriebenen Unterschiede. Gleiche Bezugszeichen kennzeichnen entsprechende Bauteile. In der vorliegenden Ausführungsform ist die Antriebsvorrichtung 7 in der Fahrzeugrichtung hinter der Achse 2 angeordnet. Der Abtrieb 14 ist über ein Schaltelement 16 drehfest mit dem Sonnenrad 21 des Längsdifferentials 20 verbindbar. Das Längsdifferential 20 ist koaxial zu dem Antriebsausgangselement 10 angeordnet. Der Planetenträger 22 des Längsdifferentials 20 bildet das Eingangselement 31 des Zwischengetriebes 30. Das Hohlrad 24 des Längsdifferentials 20 weist eine Außenverzahnung auf und bildet damit ein Ringzahnrad mit einer Innenverzahnung und einer Außenverzahnung. Die Außenverzahnung ist mit dem Ausgangselement 32 des Zwischengetriebes 30 in Eingriff. Das Ausgangselement 32 des Zwischengetriebes 30 ist als Stirnrad ausgestaltet und drehfest mit dem Differentialkorb 11 des Querdifferentials 5 verbunden. Das Zwischengetriebe 30 weist damit das Längsgetriebe 20 mit dem Ringzahnrad und das als Stirnrad ausgestaltete Ausgangselement 32 auf.

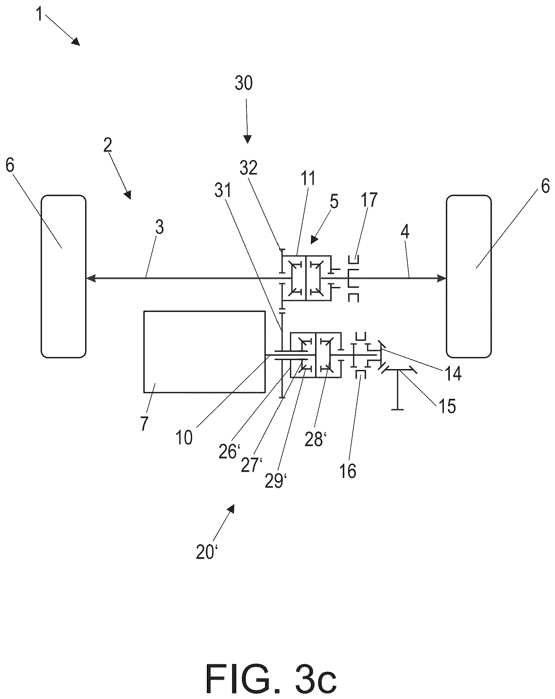

Figur 3C zeigt eine Prinzipdarstellung einer Ausführungsform des elektrischen Achsantriebs 1. Der elektrische Achsantrieb 1 der Ausführungsform von Figur 3C entspricht dem elektrischen Achsantrieb 1 der Ausführungsform von Figur 1C mit Ausnahme der im Folgenden beschriebenen Unterschiede. Gleiche Bezugszeichen kennzeichnen entsprechende Bauteile. In der vorliegenden Ausführungsform ist die Antriebsvorrichtung 7 in der Fahrzeugrichtung hinter der Achse 2 angeordnet. Der Abtrieb 14 ist über eine Schalteinrichtung 16 drehfest mit dem Differentialkegelrad 28' verbindbar. Das Antriebsausgangselement 10 ist drehfest mit dem Differentialkorb 26' verbunden. Das Längsdifferential 20' ist koaxial zu dem Antriebsausgangselement 10 angeordnet. Das Eingangselement 31 des Zwischengetriebes 30 ist drehfest mit dem Differentialkegelrad 27' verbunden. Das Ausgangselement 32 des Zwischengetriebes 30 ist drehfest mit dem Differentialkorb 11 des Querdifferentials 5 verbunden.

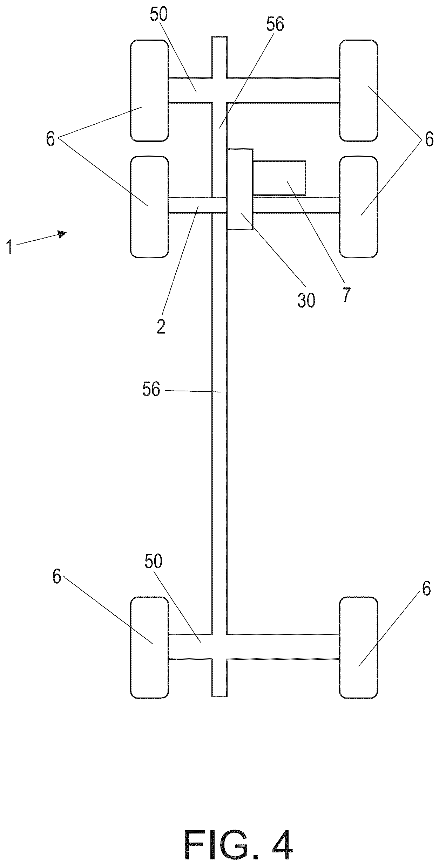

Figur 4 zeigt eine Prinzipdarstellung einer Ausführungsform der elektrischen Antriebsanordnung 100 für ein Fahrzeug. In der vorliegenden Ausführungsform weist die Antriebseinrichtung 100 einen elektrischen Achsantrieben 1 nach einer der Ausführungsformen von Figuren 1A bis 3C auf. Die Antriebseinrichtung 100 weist zumindest eine zweite Achse 50 auf, die über eine Welle 56 mechanisch mit der ersten Achse wirkverbindbar ist. In einer Ausführungsform kann die elektrische Antriebseinrichtung 100 eine dritte Achse 50 aufweisen, die über eine Welle 56 mechanisch mit der ersten Achse wirkverbindbar ist.

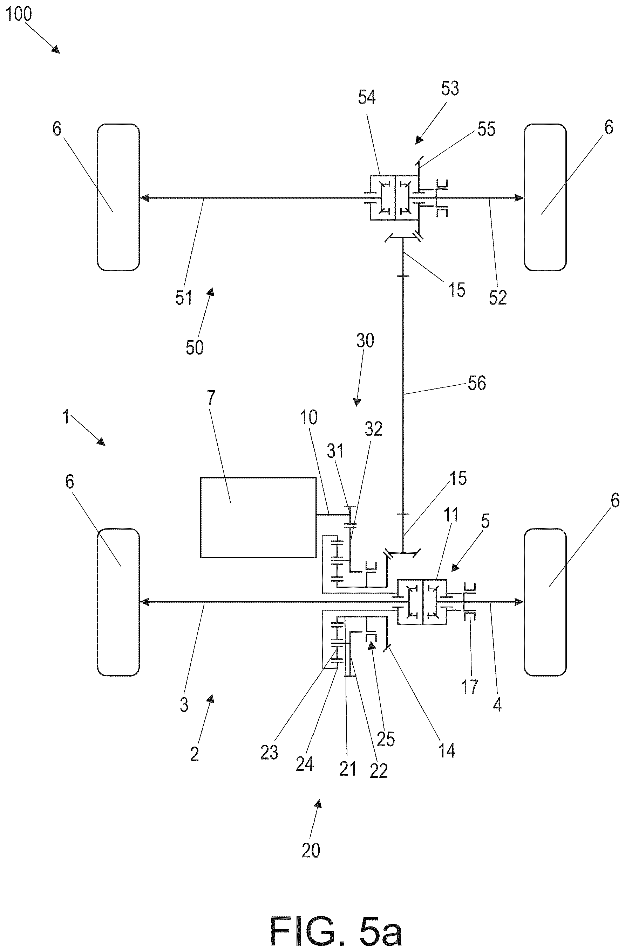

Figur 5A zeigt eine Prinzipdarstellung einer Ausführungsform der elektrischen Antriebsanordnung 100 gemäß einer Ausführungsform der vorliegenden Erfindung. Die elektrische Antriebsanordnung 100 umfasst einen elektrischen Achsantrieb 1 gemäß der Ausführungsform von Figur 1B mit einem als Planetendifferential ausgebildeten Längsdifferential 20. Der elektrische Achsantrieb 1 umfasst eine erste Achse 2, die vorliegend als Hinterachse ausgebildet ist. Darüber hinaus umfasst die elektrische Antriebsanordnung 100 eine zweite Achse 50, die vorliegend als Vorderachse ausgebildet ist. Die Vorderachse 50 ist entsprechend der Hinterachse 2 mit einem ersten Achsabschnitt 51, einem zweiten Achsabschnitt 52 und einem Querdifferential 53 ausgebildet. Über das Querdifferential 53 können Drehzahlunterschiede zwischen dem ersten und zweiten Achsabschnitt 51, 52 ausgeglichen werden. Auf dem Differentialkorb 54 des Querdifferentials 53 ist ein als Tellerrad ausgebildetes Festrad 55 vorgesehen, das mit dem Abtrieb 14 des elektrischen Achsantriebs 1 in mechanischer Wirkverbindung steht. In der vorliegenden Ausführungsform ist dafür eine Welle 56 vorgesehen, an deren Enden jeweils Kegelritzel 15 drehfest angebracht sind, die mit den Festrädern 14 und 55 kämmen. Über das als Planetenraddifferential ausgebildete Längsdifferential 20 kann ein Drehzahlausgleich zwischen der Hinterachse 2 und der Vorderachse 50 vorgenommen werden.

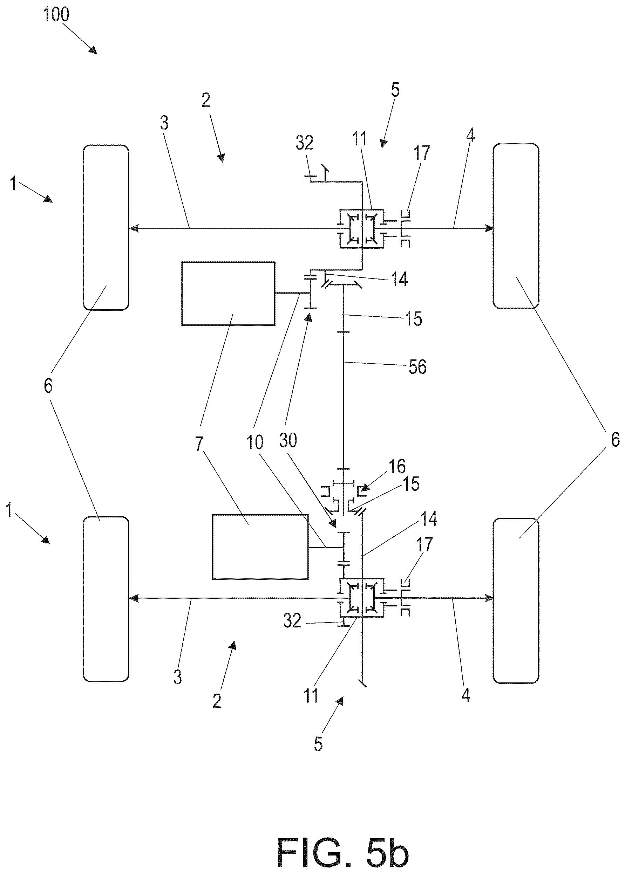

Figur 5B zeigt eine Prinzipdarstellung einer Ausführungsform der Antriebsanordnung 100. Die Antriebsanordnung 100 umfasst einen ersten elektrischen Achsantrieb 1 mit einer ersten elektrischen Achse 2, der gemäß der Ausführungsform von Figur 1A ausgebildet ist. Folglich ist das Ausgangselement 32 des Zwischengetriebes 30 permanent drehfest mit dem Differentialkorb 11 des Querdifferentials 5 verbunden. Ein Längsdifferential ist in dem ersten elektrischen Achsantrieb 1 der Ausführungsform von Figur 5B nicht vorgesehen. Die Achse 2 des ersten elektrischen Achsantriebs 1 ist in der vorliegenden Ausführungsform als Vorderachse ausgebildet. Darüber hinaus umfasst die elektrische Antriebsanordnung 100 der Ausführungsform von Figur 5B einen zweiten elektrischen Achsantrieb 1 mit einer zweiten Achse 2, die in der vorliegenden Ausführungsform als Hinterachse ausgebildet ist. Der zweite elektrische Achsantrieb 1 ist gemäß dem ersten elektrischen Achsantrieb 1 für die Vorderachse 2 ausgebildet. Die jeweils als Festrad ausgebildeten Abtriebe 14 der elektrischen Achsantriebe 1 für die Vorder- und Hinterachse sind in der vorliegenden Ausführungsform dabei mechanisch wirkverbindbar. Hierfür ist eine Schalteinrichtung 16 vorgesehen, wie sie in Verbindung mit der Ausführungsform von Figur 1A beschrieben wurde. Über die Schalteinrichtung 16 sind zwei mit den Abtrieben 14 jeweils kämmende Kegelritzel 15 über eine Welle 56 drehfest miteinander verbindbar. So kann ein Drehmoment von dem Achsantrieb 1 für die Vorderachse 2 an den Achsantrieb 1 für die Hinterachse und vice versa übertragen werden. Die Ausführungsform der Antriebseinrichtung 100 aus Figur 5B weist dabei gerade kein Längsdifferential auf, da Drehzahlunterschiede zwischen der Vorder- und Hinterachse durch die jeweiligen Antriebseinrichtungen der Achsantriebe 1 ausgeglichen werden können.

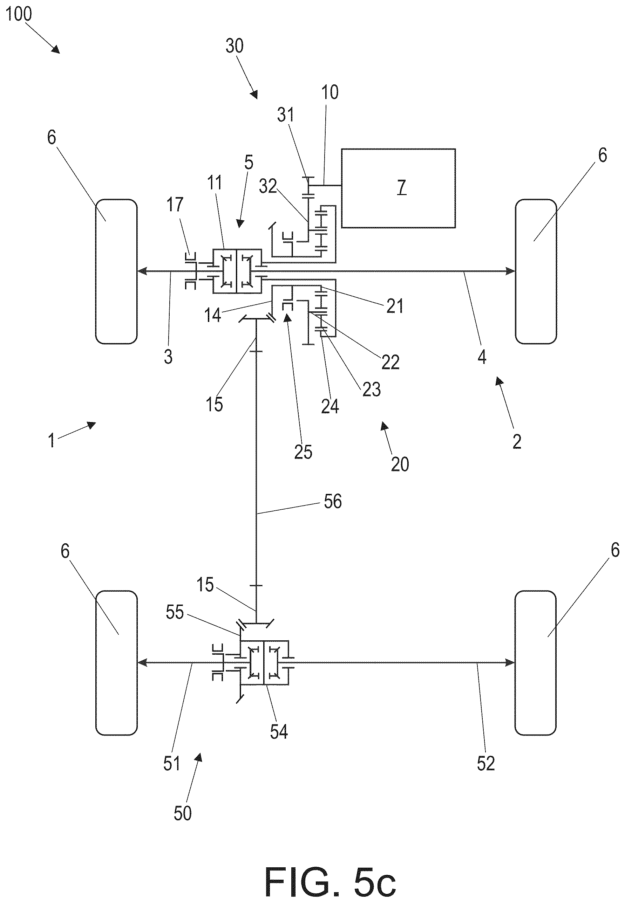

Figur 5C zeigt eine Ausführungsform der elektrischen Antriebsanordnung 100. Die Antriebsanordnung 100 umfasst einen ersten elektrischen Achsantrieb 1 mit einer ersten elektrischen Achse 2. Der erste elektrische Achsantrieb 1 ist gemäß der Ausführungsformen von Figur 1B ausgebildet, dabei jedoch bezogen auf eine Längsachse des Fahrzeugs beziehungsweise der Antriebsanordnung 100 verglichen mit der Ausführungsform von Figur 1B gespiegelt angeordnet . Vorliegend ist der elektrische Achsantrieb 1 als Vorderachse ausgestaltet. Darüber hinaus umfasst die elektrische Antriebsanordnung 100 eine zweite Achse 50, die vorliegend als Hinterachse ausgebildet ist. Für weitere Details der zweiten Achse 50 wird auf die Ausführungen im Zusammenhang mit der Ausführungsform von Figur 5A verwiesen, wobei die zweite Achse 50 verglichen mit der Ausführungsform von Figur 5A bezogen auf die Längsachse gespiegelt angeordnet ist.

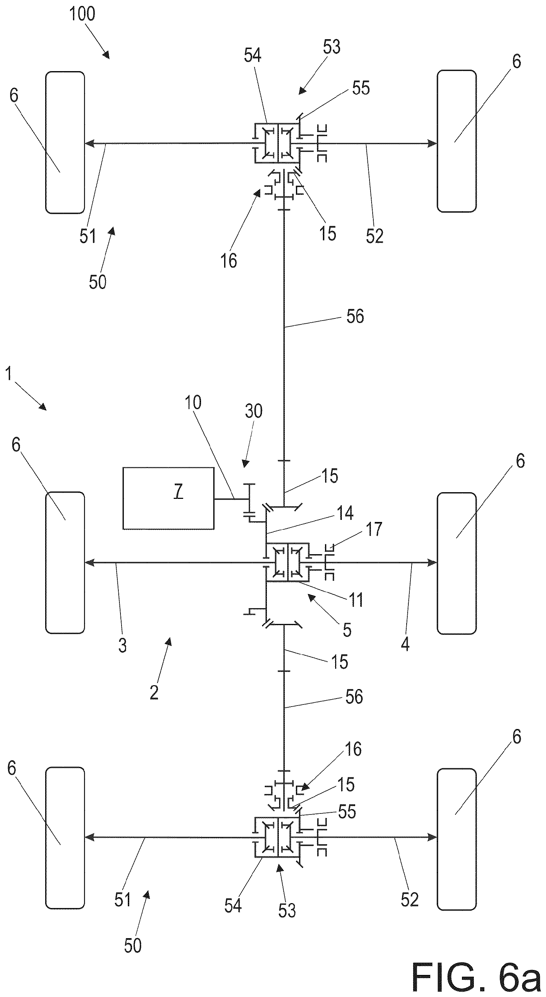

Figur 6A zeigt Prinzipdarstellung einer Ausführungsform der elektrischen Antriebsanordnung 100 mit einem elektrischen Achsantrieb 1, der gemäß der Ausführungsform von Figur 1A ausgebildet ist. Bei der Achse 2 des elektrischen Achsantriebs 1 handelt es sich um eine erste Hinterachse. Darüber hinaus umfasst die elektrische Antriebsanordnung 100 eine zweite Hinterachse 50 sowie eine Vorderachse 50, die jeweils gemäß der Vorderachse 50 der Ausführungsform von Figur 5A ausgebildet sind. Die Festräder 55 der Querdifferentiale 53 von Vorderachse 50 und zweiter Hinterachse 50 kämmen jeweils mit Kegelritzeln 15, die jeweils über eine Schalteinrichtung 16, wie sie oben beschrieben ist, über eine Welle 56 drehfest verbunden werden können. Die Kegelritzel 15 kämmen mit dem Abtrieb 14. Demnach kann ein Drehmoment des elektrischen Achsantriebs 1 über den Abtrieb 14 neben der ersten Hinterachse 2 sowohl an die zweite Hinterachse 50 als auch an die Vorderachse 50 übertragen werden. Der Abtrieb 14 ist demnach ausgebildet, um eine zweite Achse, vorliegend die Vorderachse 50, anzutreiben. Darüber hinaus bildet der Abtrieb 14 einen weiteren Abtrieb zum Antreiben einer dritten Achse 50, vorliegend der zweiten Hinterachse, aus.

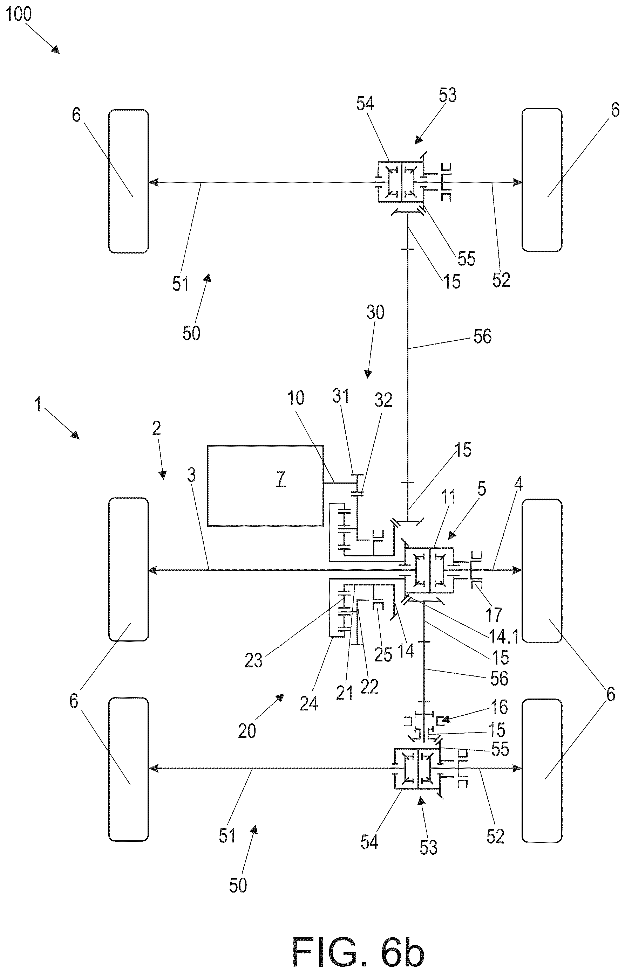

Figur 6B zeigt eine Prinzipdarstellung einer Ausführungsform der elektrischen Antriebsanordnung 100 gemäß einer weiteren Ausführungsform der vorliegenden Erfindung. Die Antriebsanordnung 100 gemäß der vorliegenden Ausführungsform ist entsprechend der Antriebsanordnung 100 von Figur 6A mit Ausnahme der im Folgenden beschriebenen Unterschiede ausgebildet. Im Unterschied zu der Antriebsanordnung 100 von Figur 6A ist der elektrische Achsantrieb 1 der ersten Hinterachse 2 in der Ausführungsform von Figur 6B mit einem als Planetenraddifferential ausgebildeten Längsdifferential 20 ausgebildet. Die Ausbildung erfolgt dabei entsprechend der Ausführungsform von Figur 1B. Dabei ist der Abtrieb 14 des elektrischen Achsantriebs 1 über die Kegelritzel 15 und die Welle 56 ohne Schalteinrichtung 16 mit dem Querdifferential 53 der zweiten Achse 50, vorliegend der Vorderachse, mechanisch wirkverbunden. Der Differentialkorb 11 des Querdifferentials 5 der ersten Hinterachse 2 bildet in Form eines auf diesem vorgesehenen Festrads einen weiteren Abtrieb 14.1 aus. Mit dem weiteren Abtrieb 14.1 ist die dritte Achse 50, vorliegend die zweite Hinterachse, entsprechend der in Verbindung mit der Ausführungsform von Figur 6A beschriebenen Ausgestaltung mechanisch über eine Schalteinrichtung 16 wirkverbindbar. Folglich kann im Rahmen dieser Ausführungsform die zweite Hinterachse 50 über die Schalteinrichtung 16 zugeschaltet werden, wobei ein Drehzahlausgleich zwischen der ersten und zweiten Hinterachse 2, 50 nicht erfolgen kann. Aufgrund des Längsdifferentials 20 kann hingegen ein Drehzahlausgleich zwischen der Vorderachse 50 und der ersten Hinterachse 2 erfolgen. Der elektrische Achsantrieb 1 der ersten Hinterachse 2 kann im Rahmen dieser Ausführungsform jedoch ein Drehmoment an beide Hinterachsen 2, 50 und auch an die Vorderachse 50 übertragen.

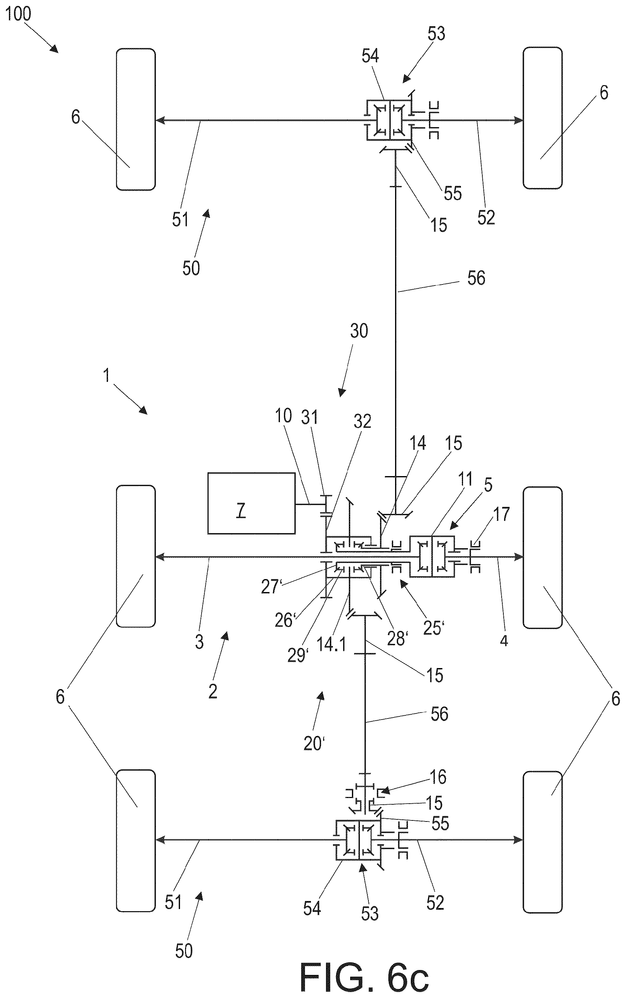

Figur 6C zeigt eine Prinzipdarstellung einer Ausführungsform der elektrischen Antriebsanordnung 100. Die elektrische Antriebsanordnung 100 ist gemäß der elektrischen Antriebsanordnung 100 aus Figur 6B mit Ausnahme der im Folgenden beschriebenen Unterschiede ausgebildet. Im Unterschied zu der elektrischen Antriebsanordnung 100 aus Figur 6B ist der elektrische Achsantrieb 1 der ersten Hinterachse 2 in der vorliegenden Ausführungsform gemäß der Ausführungsform von Figur 1C ausgebildet. Demnach umfasst der elektrische Achsantrieb 1 der vorliegenden Ausführungsform ein als Kegelraddifferential ausgebildetes Längsdifferential 20' zum Drehzahlausgleich zwischen der als erste Hinterachse ausgebildeten ersten Achse 2 und der als Vorderachse ausgebildeten zweiten Achse 50. Auf dem Ausgangselement 32 des Zwischengetriebes 30 beziehungsweise dem Differentialkorb 26' des Längsdifferentials 20' ist ferner ein als Festrad vorgesehener weiterer Abtrieb 14.1 ausgebildet, über welchen gemäß den Ausführungen im Zusammenhang mit der Ausführungsform von Figur 6B eine dritte Achse 50, vorliegend die zweite Hinterachse, über eine Schalteinrichtung 16 selektiv zugeschaltet werden kann.

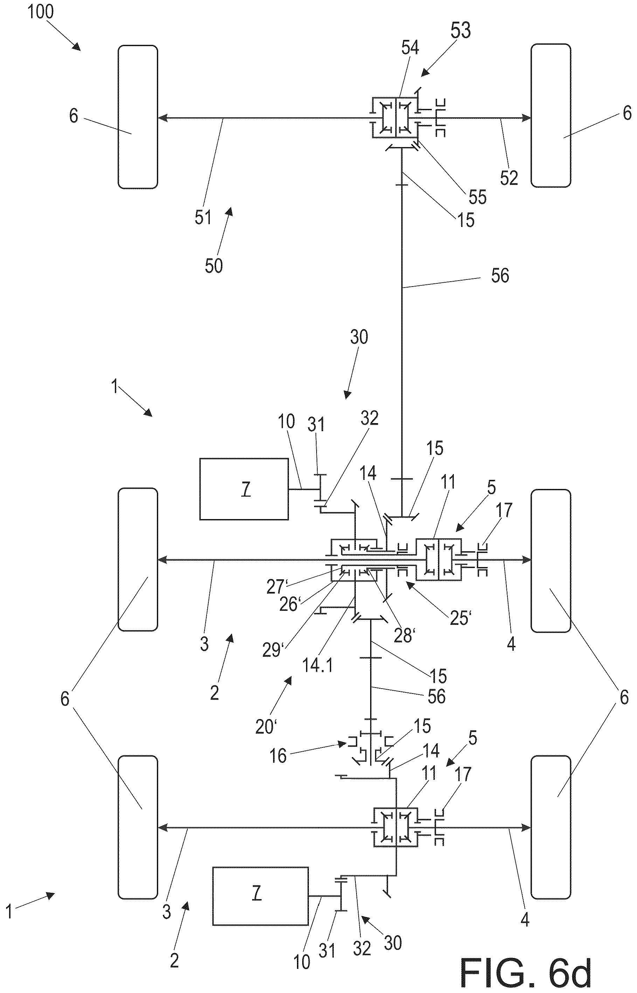

Figur 6D zeigt eine Prinzipdarstellung einer weiteren Ausführungsform der elektrischen Antriebsanordnung 100. Die elektrische Antriebsanordnung 100 der vorliegenden Ausführungsform entspricht der elektrischen Antriebsanordnung 100 der Ausführungsform von Figur 6C mit Ausnahme der im Folgenden beschriebenen Unterschiede. Im Unterschied zu der Antriebsanordnung 100 von Figur 6C ist in der vorliegenden elektrischen Antriebsanordnung 100 die dritte Achse, vorliegend die zweite Hinterachse 2, mit einem eigenen elektrischen Achsantrieb 1 ausgebildet. In der vorliegenden Ausführungsform ist der elektrische Achsantrieb 1 der zweiten Hinterachse 2 gemäß der Ausführungsform von Figur 1A ausgebildet und weist demnach kein Längsdifferential 20 beziehungsweise 20' auf. Das Ausgangselement 32 des Zwischengetriebes 30 des elektrischen Achsantriebs 1 der zweiten Hinterachse 2 ist über die Schalteinrichtung 16 gemäß den Ausführungen im Zusammenhang mit der Ausführungsform von Figur 6C mechanisch mit dem weiteren Abtrieb 14.1 des elektrischen Achsantriebs 1 der ersten Hinterachse 2 wirkverbindbar.

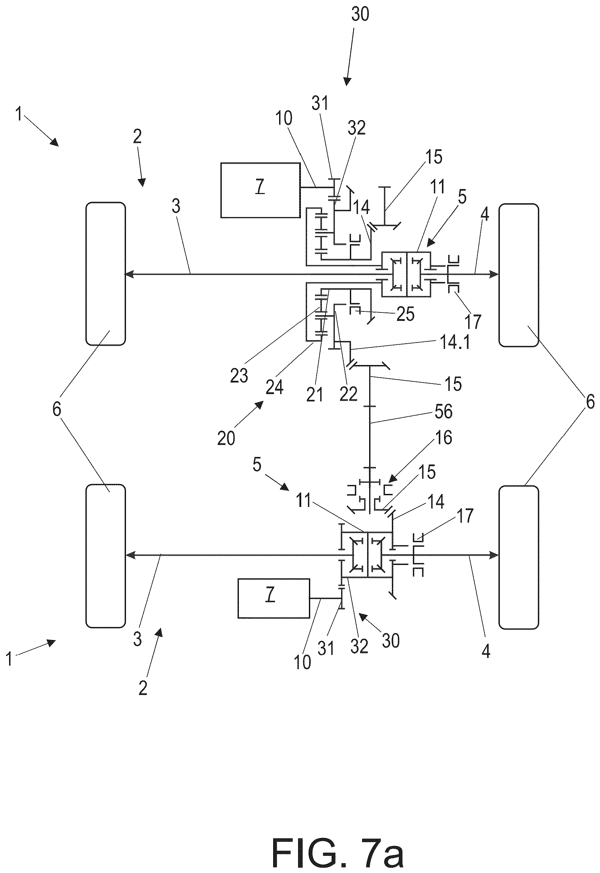

Figur 7A zeigt eine Prinzipdarstellung einer Ausführungsform der elektrischen Antriebsanordnung 100. Die in Figur 7A gezeigte Antriebsanordnung 100 ist eine Hinterradantriebsanordnung mit einer ersten Hinterachse 2 und einer zweiten Hinterachse 2. Dabei ist der elektrische Achsantrieb 1 der ersten Hinterachse 2 gemäß der Ausführungsform von Figur 1B ausgebildet. Über den Abtrieb 14 kann eine nicht gezeigte Vorderachse an den elektrischen Achsantrieb 1 der ersten Hinterachse 2 angebunden werden. Die zweite Hinterachse 2 weist einen eigenen elektrischen Achsantrieb 1 auf, der in der vorliegenden Ausführungsform gemäß der Ausführungsform von Figur 1A ausgebildet ist. Der Abtrieb 14 des elektrischen Achsantriebs 1 der zweiten Hinterachse 2 ist gemäß den Ausführungen in Verbindung mit den Ausführungsformen von Figur 5B oder 6D über eine Schalteinrichtung 16 an den elektrischen Achsantrieb 1 der ersten Hinterachse 2 mechanisch anbindbar. In der vorliegenden Ausführungsform ist dabei an dem Ausgangselement 32 des Zwischengetriebes 30 des elektrischen Achsantriebs 1 der ersten Hinterachse 2 ein weiterer Abtrieb 14.1 vorgesehen. Mit dem weiteren Abtrieb 14.1 kämmt ein Kegelritzel 15, das über die Schalteinrichtung 16 und die Welle 56 mit dem weiteren Kegelritzel 15 drehfest verbindbar ist. Das weitere Kegelritzel 15 kämmt wiederum mit dem Abtrieb 14 des elektrischen Achsantriebs 1 der zweiten Hinterachse 2.

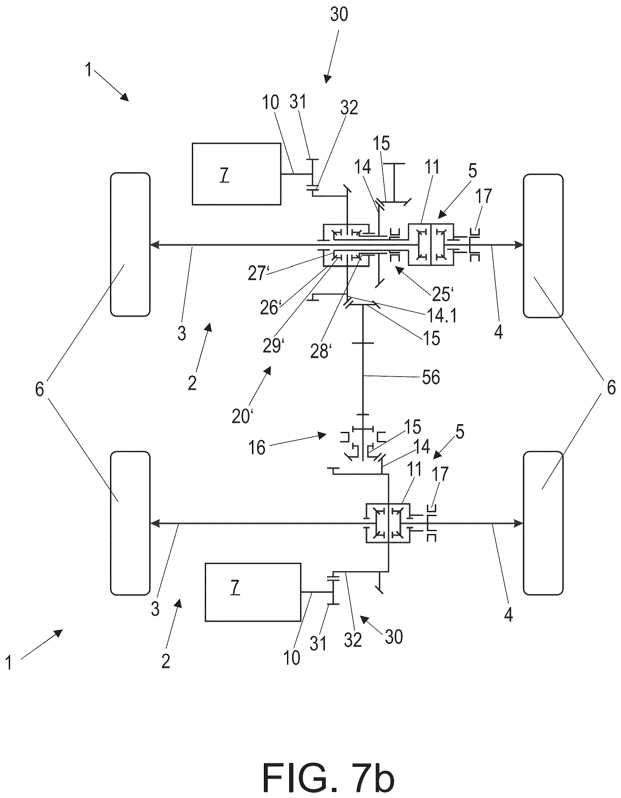

Figur 7B zeigt eine Prinzipdarstellung einer Ausführungsform der elektrischen Antriebsanordnung 100. Die vorliegende Ausführungsform der elektrischen Antriebsanordnung 100 ist entsprechend der Ausführungsform der elektrischen Antriebsanordnung 100 von Figur 7A als Hinterradantriebsanordnung ausgebildet. Die erste elektrische Hinterachse 2 und die zweite elektrische Hinterachse 2 weisen dabei jeweils eine eigene elektrische Antriebseinrichtung 7 auf. Dabei sind der elektrische Achsantrieb 1 für die erste Hinterachse 2 und der elektrische Achsantrieb 1 für die zweite Hinterachse 2 entsprechend den Achsantrieben 1 für die erste und zweite Hinterachse aus der Ausführungsform von Figur 6D ausgebildet. Es wird auf die entsprechenden Ausführungen in Verbindung mit dieser Ausführungsform verwiesen. Entsprechend der Ausführungsform von Figur 6D kann ferner an den Abtrieb 14 des elektrischen Achsantriebs 1 der ersten Hinterachse 2 eine Vorderachse mechanisch angebunden werden.

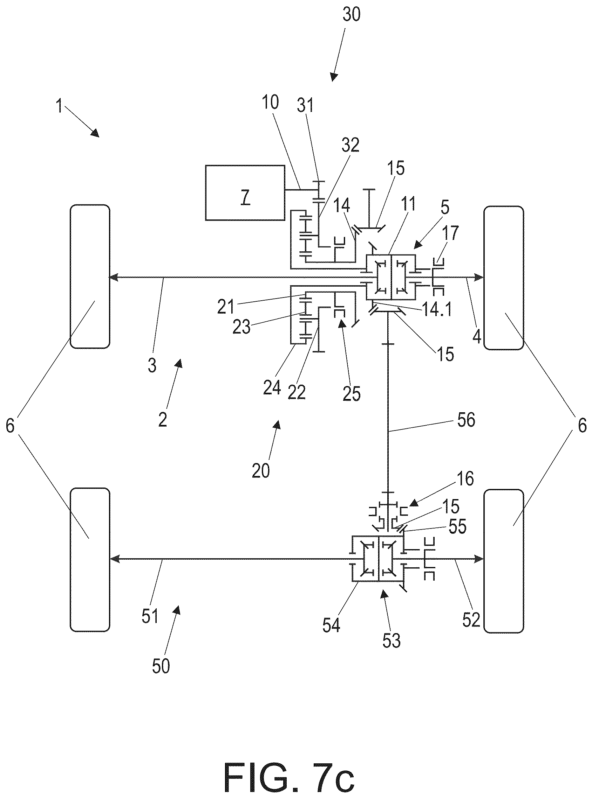

Figur 7C zeigt eine Prinzipdarstellung einer Ausführungsform der elektrischen Antriebsanordnung 100. Die vorliegende Ausführungsform der elektrischen Antriebsanordnung 100 ist eine Hinterradantriebsanordnung und umfasst eine erste Achse 2 mit einem eigenen elektrischen Achsantrieb 1. Der elektrische Achsantrieb 1 ist zum Antreiben einer zweiten Hinterachse 50 ausgebildet. Der elektrische Achsantrieb 1 für die erste Hinterachse 2 sowie die zweite Hinterachse 50 ist entsprechend der Ausführungen im Zusammenhang mit der Ausführungsform von Figur 6B ausgebildet und über eine Schalteinrichtung 16 mechanisch miteinander koppelbar. Allerdings ist die elektrische Antriebsanordnung 100 der vorliegenden Ausführungsform bezogen auf die Fahrzeugrichtung gespiegelt, verglichen mit der mit Bezug auf Figur 6B beschriebene Ausführungsform. Es wird auf die entsprechenden Ausführungen im Zusammenhang mit dieser Ausführungsform verwiesen. Ferner ist mit dem Abtrieb 14 des elektrischen Achsantriebs 1 der ersten Hinterachse 2 über ein Kegelritzel 15 eine nicht gezeigte Vorderachse mechanisch wirkverbindbar.

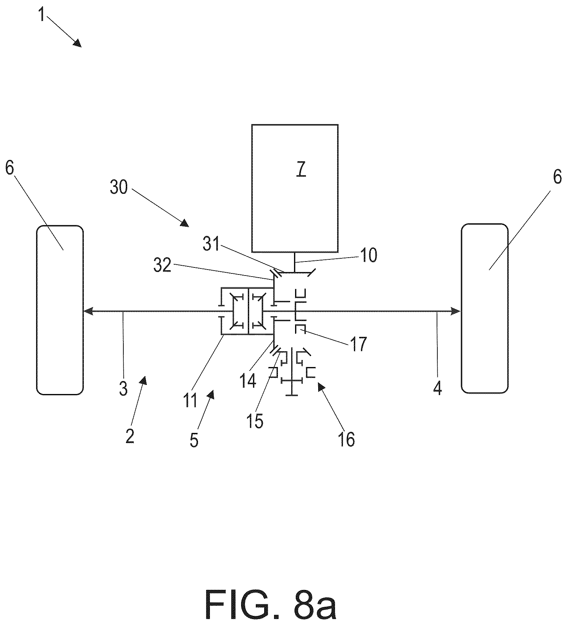

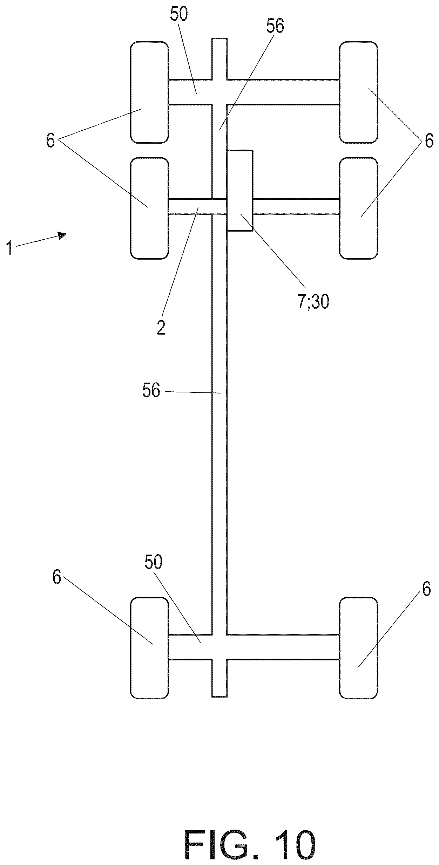

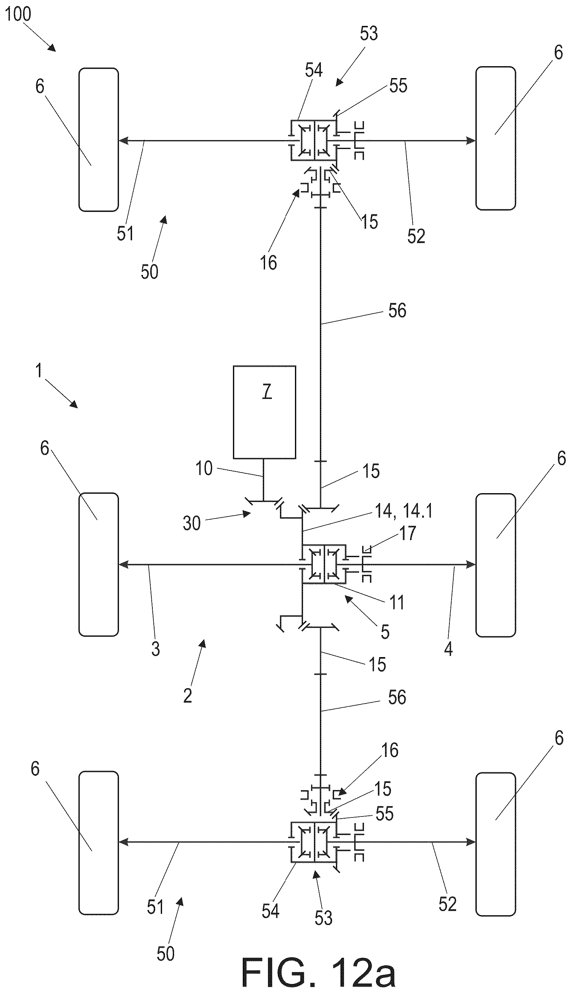

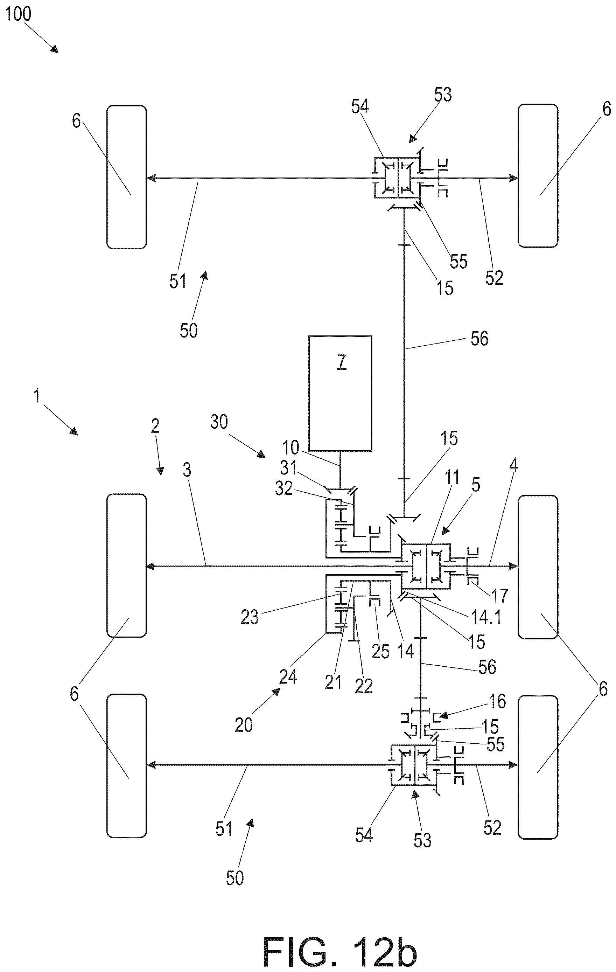

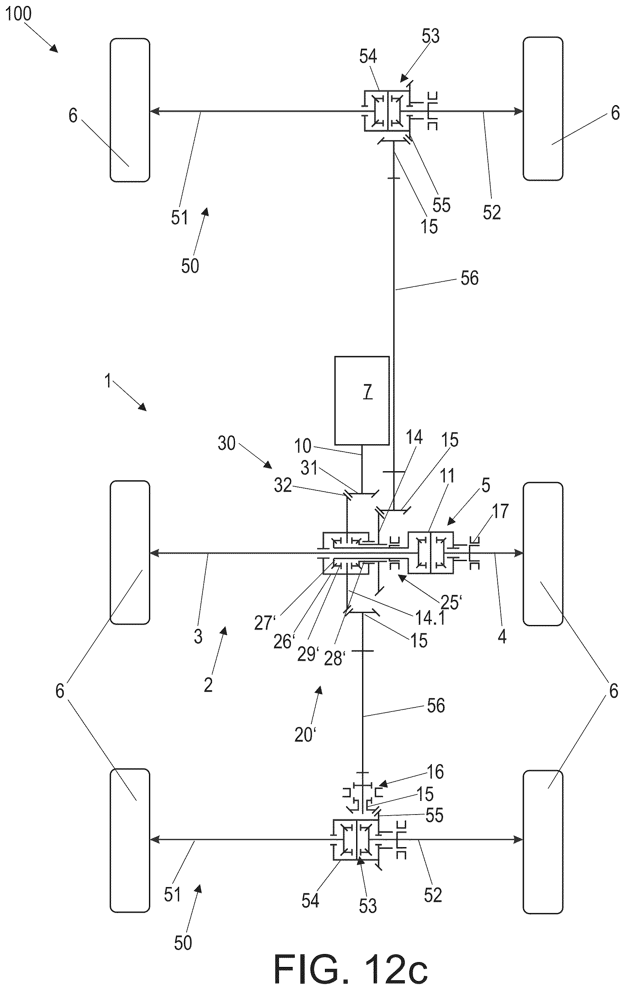

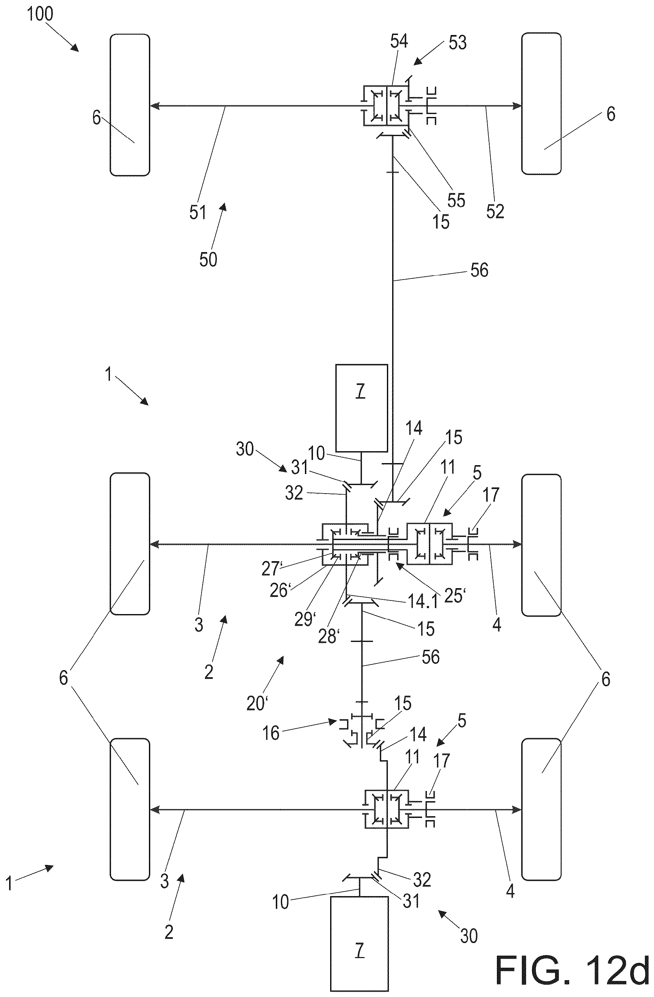

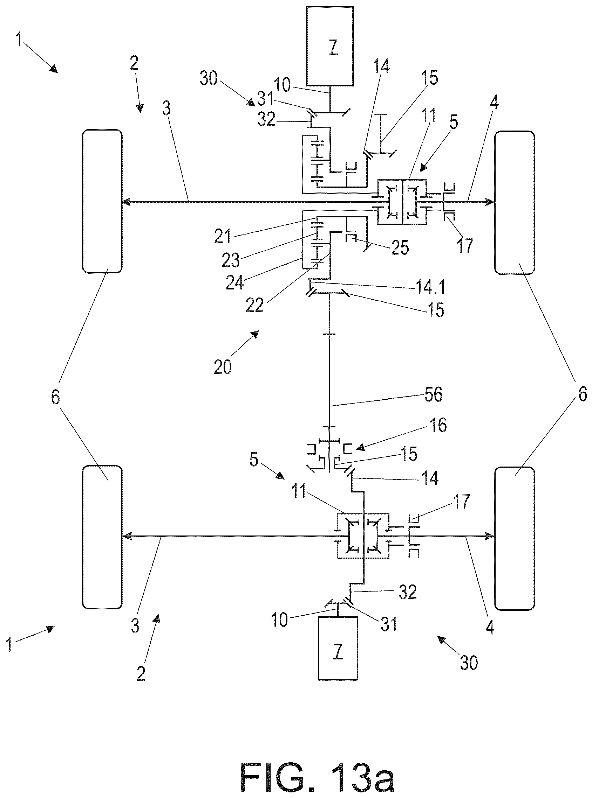

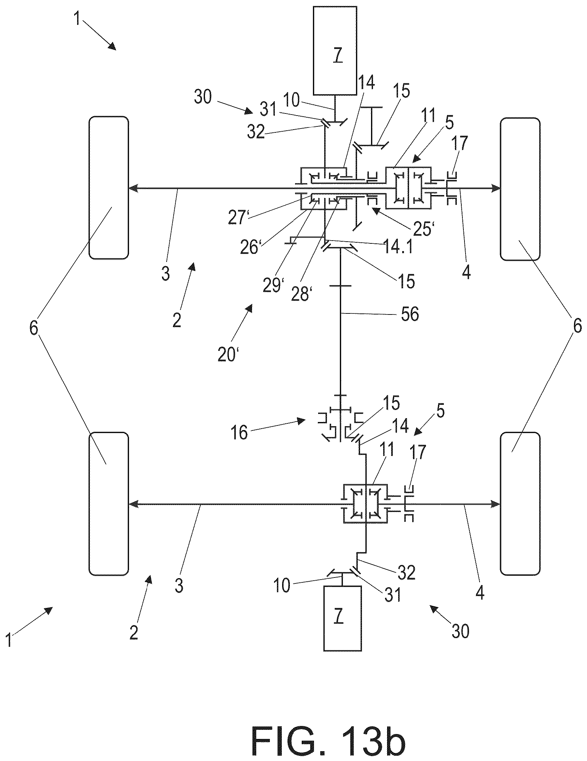

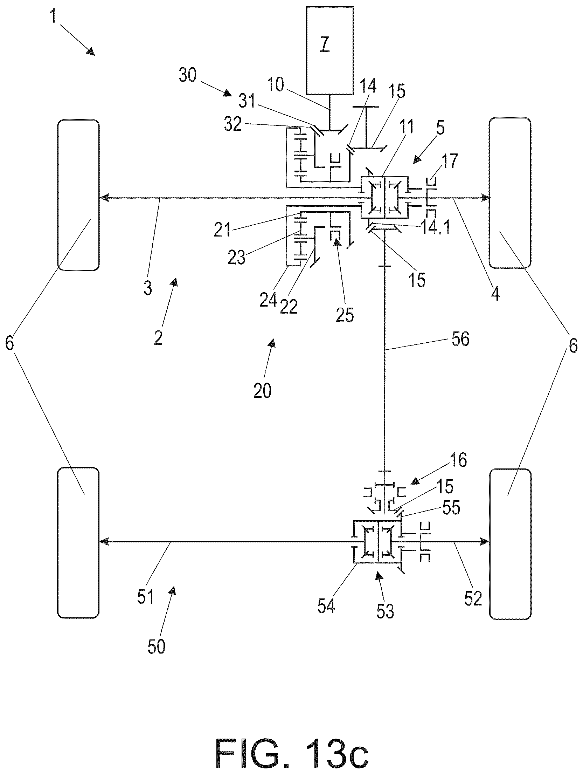

Figuren 8A bis 9C zeigen jeweils eine Prinzipdarstellung einer Ausführungsform des elektrischen Achsantriebs 1 mit längs angeordneter Antriebseinrichtung 7 mit dem Antriebsausgangselement 10. Figuren 10 bis 13C zeigen jeweils eine Prinzipdarstellung einer Ausführungsform der elektrischen Antriebsanordnung 100 mit längs angeordneter Antriebseinrichtung 7 mit dem Antriebsausgangselement 10. Weitere Details der Ausführungsformen werden im Folgenden beschrieben. In alternativen Ausführungsformen kann der elektrische Achsantriebs 12 mit längs angeordneter Antriebseinrichtung 7 ferner Planetenstufen 26, wie in den in Figuren 2A bis 2C gezeigten Ausführungsformen, aufweisen.

Die Ausführungsform des elektrischen Achsantriebs 1 von Figur 8A entspricht der in Figur 1A gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz ausgebildet. Das Eingangselement 31 des Zwischengetriebes 30 ist als Kegelritzel ausgestaltet und längst zu der Achse 2 angeordnet. Das Ausgangselement 32 des Zwischengetriebes 30 ist als Tellerrad ausgestaltet und koaxial zu der Achse 2 angeordnet.

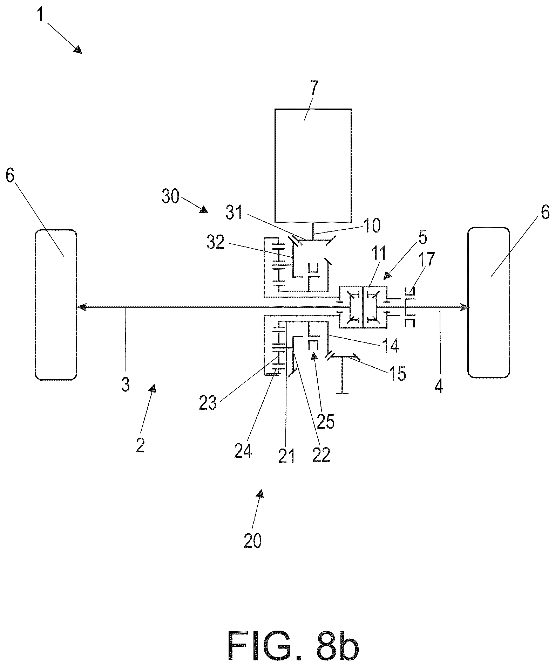

Die Ausführungsform des elektrischen Achsantriebs 1 von Figur 8B entspricht der in Figur 1B gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet.

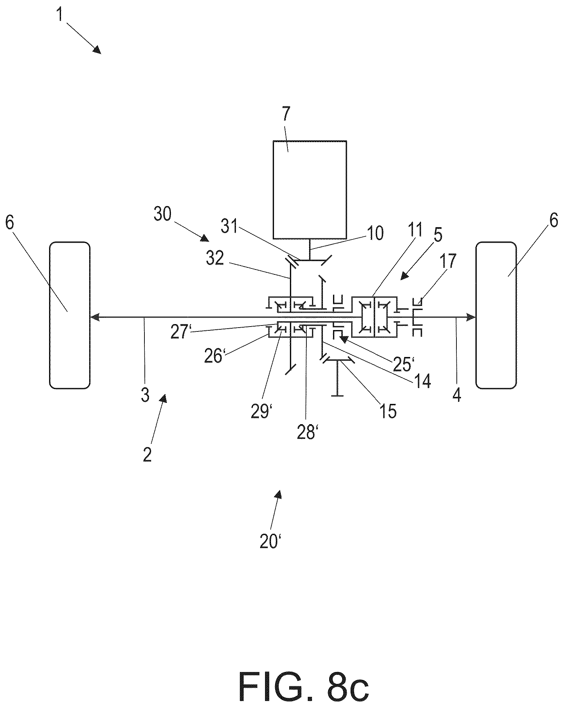

Die Ausführungsform des elektrischen Achsantriebs 1 von Figur 8C entspricht der in Figur 1C gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet.

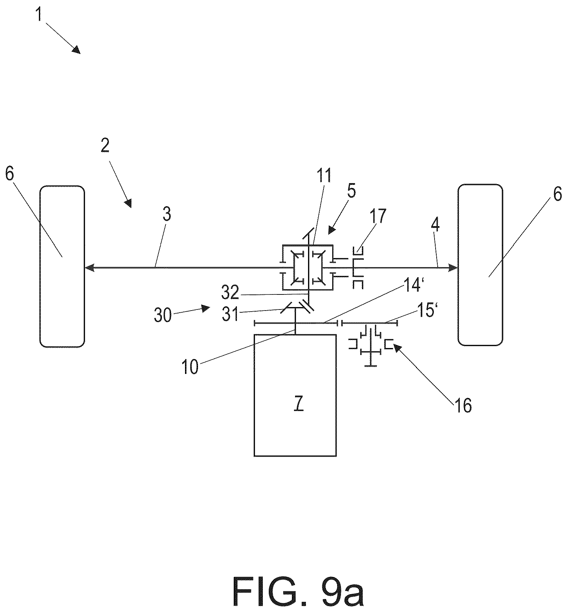

Die Ausführungsform des elektrischen Achsantriebs 1 von Figur 9A entspricht der in Figur 3A gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet. Anstatt dem als Tellerrad bzw. Kegelritzel ausgestalteten Abtrieb 14 ist ein als Stirnrad ausgebildeter Abtrieb 14' vorgesehen. Anstatt dem Kegelritzel 15 ist ein Stirnrad 15' vorgesehen. Der Abtrieb 14' ist mit dem Stirnrad 15' in Zahneingriff.

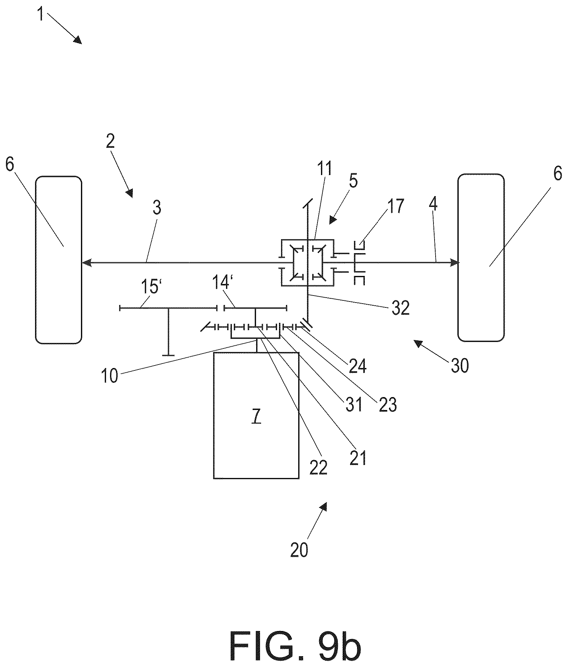

Die Ausführungsform des elektrischen Achsantriebs 1 von Figur 9B entspricht der in Figur 3B gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet. Anstatt dem als Tellerrad bzw. Kegelritzel ausgestalteten Abtrieb 14 ist ein als Stirnrad ausgebildeter Abtrieb 14' vorgesehen. Anstatt dem Kegelritzel 15 ist ein Stirnrad 15' vorgesehen. Der Abtrieb 14' ist mit dem Stirnrad 15' in Zahneingriff. Das Längsdifferential 20 ist koaxial zu dem Antriebsausgangselement 10 und quer zu der Achse 2 angeordnet. Der Abtrieb 14' ist mechanisch permanent und ohne Schalteinrichtung 16 mit der nicht gezeigten zweiten Achse mechanisch wirkverbunden. Die Außenverzahnung des Ringzahnrads ist als Tellerrad ausgestaltet.

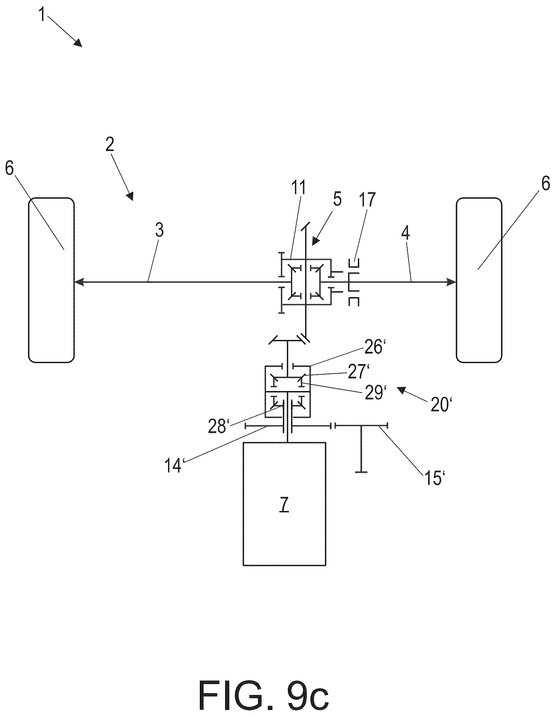

Die Ausführungsform des elektrischen Achsantriebs 1 von Figur 9C entspricht der in Figur 3C gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet. Anstatt dem als Tellerrad bzw. Kegelritzel ausgestalteten Abtrieb 14 ist ein als Stirnrad ausgebildeter Abtrieb 14' vorgesehen. Anstatt dem Kegelritzel 15 ist ein Stirnrad 15' vorgesehen. Der Abtrieb 14' ist mit dem Stirnrad 15' in Zahneingriff. Das Längsdifferential 20' ist koaxial zu dem Antriebsausgangselement 10 und quer zu der Achse 2 angeordnet. Der Abtrieb 14' ist mechanisch permanent und ohne Schalteinrichtung 16 mit der nicht gezeigten zweiten Achse mechanisch wirkverbunden.

Figur 10 zeigt eine Prinzipdarstellung einer Ausführungsform der elektrischen Antriebsanordnung 100. Die folgende Ausführungsform entspricht der in Figur 4 gezeigten Ausführungsform der elektrischen Antriebsanordnung 100 mit Ausnahme der im Folgenden beschriebenen Unterschiede. Gleiche Bezugszeichen kennzeichnen entsprechende Bauteile. Wie oben bereits erwähnt, ist in der vorliegenden Ausführungsform die elektrische Antriebseinrichtung 7 längs angeordnet.

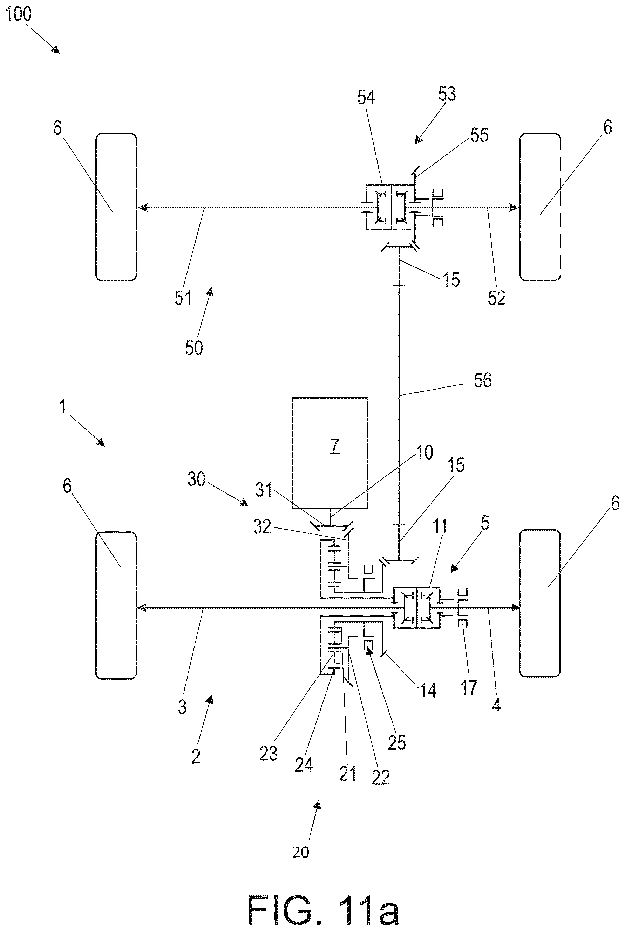

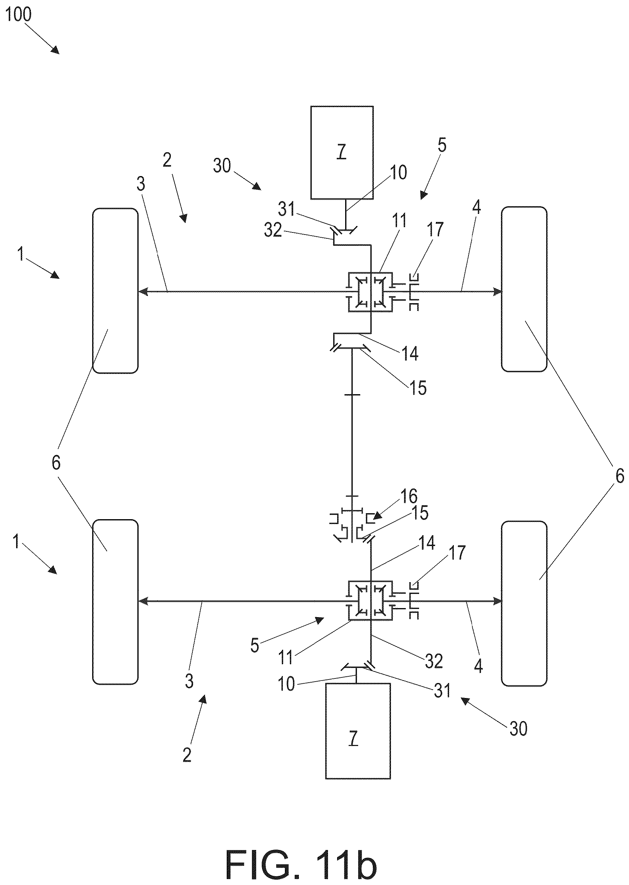

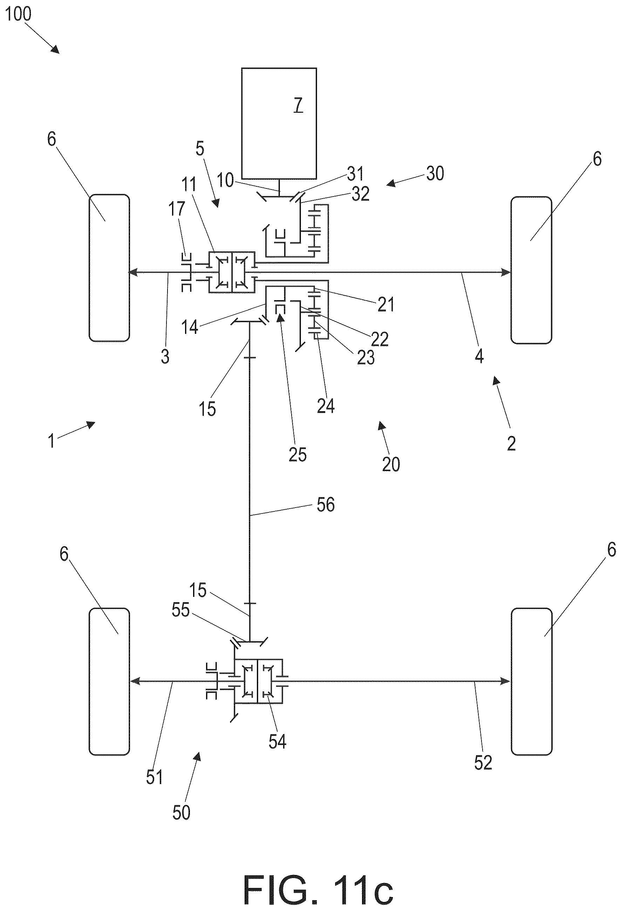

Die Ausführungsform des elektrischen Achsantriebs 1 von Figur 11A bis 13C entsprechen jeweils der in Figur 5A bis 7C gezeigten Ausführungsform des Achsantriebs 1 mit Ausnahme der weiteren im Folgenden beschriebenen Unterschiede. Gleiche Bezugszeichen kennzeichnen entsprechende Bauteile. In der vorliegenden Ausführungsform ist das Zwischengetriebe 30 als Kegelradsatz gemäß der Ausführungsform von Figur 8A ausgebildet.

### Bezugszeichen

- 1: elektrischer Achsantrieb
- 2: Achse
- 3, 4: Achsabschnitt
- 5: Querdifferential
- 6: Rad
- 7: elektrische Antriebseinrichtung
- 10: Antriebsausgangselement
- 11, 26': Differentialkorb
- 13, 13': Schalteinrichtung
- 14, 14.1: Abtrieb
- 14': Abtrieb
- 15: Kegelritzel
- 15': Stirnrad
- 16: Schalteinrichtung
- 17, 25, 25': Differentialsperre
- 37, 38, 39: Differentialkegelrad
- 30, 30': Zwischengetriebe
- 31, 31': Eingangselement
- 32, 32': Ausgangselement
- 20, 20': Längsdifferential
- 21: Sonnenrad
- 22: Planetenträger
- 23: Planetenrad
- 24: Hohlrad
- 26: Planetenstufe
- 27', 28', 29': Differentialkegelrad
- 50: zweite, dritte Achse
- 51, 52: Achsabschnitt zweite, dritte Achse
- 53: Querdifferential zweite, dritte Achse
- 54: Differentialkorb zweite, dritte Achse
- 55: Tellerrad zweite, dritte Achse
- 56: Welle
- 100: elektrische Antriebsanordnung

## Patentansprüche

1. Elektrischer Achsantrieb (1) für ein Fahrzeug mit einer ersten Achse (2) zum Anbringen von Rädern (6), einer elektrischen Antriebseinrichtung (7), die einen Elektromotor und ein Antriebsausgangselement (10) zum Antreiben der ersten Achse (2) aufweist, und einem Abtrieb (14) zum mechanischen Anbinden einer zweiten Achse (2; 50) zum Anbringen von Rädern (6), wobei der elektrische Achsantrieb (1) ausgebildet ist, um mit der elektrischen Antriebseinrichtung (7) neben der ersten Achse (2) auch die zweite Achse (2; 50) über den Abtrieb (14) anzutreiben, wobei der Elektromotor und das Antriebsausgangselement (10) versetzt zu der ersten Achse (2) angeordnet sind.

2. Elektrischer Achsantrieb (1) nach Anspruch 1, **dadurch gekennzeichnet, dass** die erste Achse (2) einen ersten Achsabschnitt (3) zum Anbringen eines ersten Rads (6), einen zweiten Achsabschnitt (4) zum Anbringen eines zweiten Rads (6) und ein mit dem ersten und zweiten Achsabschnitt (3, 4) mechanisch wirkverbundenes Querdifferential (5) zum Drehzahlausgleich zwischen den Achsabschnitten (3, 4) aufweist.

3. Elektrischer Achsantrieb (1) nach einem der vorhergehenden Ansprüche, **dadurch gekennzeichnet, dass** der Achsantrieb (1) einen weiteren Abtrieb (14.1) zum mechanischen Anbinden einer dritten Achse (2; 50) zum Anbringen von Rädern (6) aufweist, wobei der elektrische Achsantrieb (1) ausgebildet ist, um mit der elektrischen Antriebseinrichtung (7) der ersten Achse (2) auch die dritte Achse (2; 50) über den weiteren Abtrieb (14.1) anzutreiben.

4. Elektrischer Achsantrieb (1) nach einem der vorhergehenden Ansprüche, **dadurch gekennzeichnet, dass** der elektrische Achsantrieb (1) ein Längsdifferential (20; 20') zum Drehzahlausgleich zwischen der ersten Achse (2) und der zweiten Achse (2; 50) aufweist.

5. Elektrischer Achsantrieb (1) nach Anspruch 4, **dadurch gekennzeichnet, dass** das Längsdifferential ausgebildet ist als zumindest eines von einem Planetenraddifferential (20) und einem Kegelraddifferential (20').

6. Elektrischer Achsantrieb (1) nach einem der vorhergehenden Ansprüche, **dadurch gekennzeichnet, dass** jeweils eines der Räder (6) über eine Planetenstufe (26) an die jeweilige Achse (2; 50) angebunden ist.

7. Elektrische Antriebsanordnung (100) mit einem elektrischen Achsantrieb (1) nach einem der Ansprüche 1 bis 6 und einer zweiten Achse (2; 50), wobei die zweite Achse (2; 50) über die elektrische Antriebseinrichtung (7) und den Abtrieb (14) der ersten Achse (2) antreibbar ist.

8. Elektrische Antriebsanordnung (100) nach Anspruch 7, **dadurch gekennzeichnet, dass** die zweite Achse (2; 50) über das Längsdifferential (20; 20') antreibbar ist.

9. Elektrische Antriebsanordnung (100) mit zwei elektrischen Achsantrieben (1) nach einem der Ansprüche 1 bis 6, wobei ein Drehmoment zwischen Abtrieben (14) der Achsantriebe (1) übertragbar ist.

10. Elektrische Antriebsanordnung (100) nach einem der Ansprüche 7 bis 9, **dadurch kennzeichnet, dass** die elektrische Antriebsanordnung (100) eine dritte Achse (2; 50) aufweist, die über die elektrische Antriebseinrichtung (7) und den weiteren Abtrieb (14.1) der ersten Achse (2) antreibbar ist.

11. Fahrzeug mit einer elektrischen Antriebsanordnung (100) nach einem der Ansprüche 7 bis 10.
